(19) Europäisches Patentamt / European Patent Office / Office européen des brevets

(11) **EP 4 579 297 A1**

(12) **DEMANDE DE BREVET EUROPEEN**

(43) Date de publication:
**02.07.2025 Bulletin 2025/27**

(21) Numéro de dépôt: **24223292.4**

(22) Date de dépôt: **26.12.2024**

(51) Classification Internationale des Brevets (IPC):
**G02B 6/124** *(2006.01)* **G02B 6/30** *(2006.01)*
**G02B 6/34** *(2006.01)* **G02B 6/27** *(2006.01)*
**G02B 6/12** *(2006.01)*

(52) Classification Coopérative des Brevets (CPC):
**G02B 6/34; G02B 6/124; G02B 6/30;** G02B 6/2793;
G02B 2006/12061; G02B 2006/12107;
G02B 2006/1215; G02B 2006/12154

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **26.12.2023 FR 2315259**

(71) Demandeur: **Commissariat à l'Energie Atomique
et aux Energies
Alternatives
75015 Paris (FR)**

(72) Inventeurs:
• **FOWLER, Daivid**
  **38054 Grenoble cedex 09 (FR)**
• **GROSSE, Philippe**
  **38054 Grenoble cedex 09 (FR)**
• **VIROT, Leopold**
  **38054 Grenoble cedex 09 (FR)**

(74) Mandataire: **INNOV-GROUP
209 Avenue Berthelot
69007 Lyon (FR)**

(54) **STRUCTURE DE TEST INTÉGRÉE SUR SILICIUM POUR LA CARACTÉRISATION DE LA PDL D'UN COUPLEUR OPTIQUE FIBRE/SILICIUM À RÉSEAU DE DIFFRACTION BIDIMENSIONNEL**

(57) Une structure de test intégrée sur silicium pour la caractérisation de la PDL d'un coupleur optique fibre/silicium de type "1 vers 2" à réseau de diffraction bidimensionnel (2DGC), comprend le 2DGC à tester (61) configuré en coupleur de sortie, monté en miroir avec un autre coupleur optique fibre/silicium de type "1 vers 2" configuré en coupleur d'entrée, par l'intermédiaire de guides d'onde planaires (64,65) couplant leurs bornes optiques guidées respectives. Un déphaseur réglable (63) est agencé au niveau d'un de ces guides d'onde (65). On insère un signal optique polarisép ou s via le coupleur d'entrée (62). On pilote le déphaseur réglable pour appliquer un décalage de phase pur entre 0 et $\pi$ au signal optique se propageant dans ce guide d'onde (65). Le signal en entrée du 2DGC à tester (61) balaye alors tous les états mixtes de polarisation. La variation de la transmission optique dans le 2DGC sous test (61) durant ce balayage donne la PDL.

Fig.6A

**Description**

**Domaine technique de l'invention**

La présente invention se rapporte de manière générale aux circuits intégrés photoniques (ou PICs, de l'anglais "Photonic Integrated Circuits") destinés à être couplés à une ou plusieurs fibres optiques, et concerne plus particulièrement un coupleur optique à réseau de diffraction pour réaliser un couplage optique entre la ou les fibre(s) optique(s) et un tel circuit intégré photonique.

L'invention trouve des applications, en particulier, dans le secteur des télécommunications optiques et des réseaux de transmission de données (en anglais « Data transmission network ») sur fibre optique monomode ou multimode, par exemple pour les liaisons à haut débit dans les réseaux optiques passifs (PON, de l'anglais « Passive Optical Network ») comme les réseaux FTTH (de l'anglais « Fiber-to-the-Home »).

**Arrière-plan technologique**

Les systèmes de transmission à fibres optiques utilisent des liaisons de données dans lesquelles chaque maillon de fibre comprend un émetteur à une extrémité d'une fibre et un récepteur à l'autre extrémité de ladite fibre. Le prix de la fibre optique étant relativement bas, la plupart des systèmes fonctionnent en duplex intégral par transmission dans un sens sur une fibre et dans le sens inverse sur une autre fibre. Certains systèmes toutefois, comme les réseaux optiques passifs FTTH (PON) utilisent la transmission bidirectionnelle sur une seule fibre, et utilisent à cet effet des composants émetteurs-récepteurs appelés "transceivers", qui comprennent un dispositif de couplage optique, ou coupleur optique à réseau ("Grating" en anglais).

L'invention s'intéresse plus particulièrement aux coupleurs optiques utilisés pour réaliser un couplage optique entre la ou les fibre(s) optique(s) et des circuits photoniques, lorsque le coupleur optique à réseau est intégré avec les circuits photoniques sur un même substrat, par exemple un substrat de silicium (Si). Plus particulièrement, le type de coupleur en question est un coupleur à réseau de diffraction ("grating", en anglais) bidimensionnel, souvent appelé soit 2DGC (de l'anglais "two-dimensional Grating Coupler") soit PSGC (de l'anglais "Polarisation Splitting Grating Coupler"). Un 2DGC est un coupleur fibre à diversité de polarisation. Ce composant est typiquement (mais pas exclusivement) utilisé dans un transceiver, dans le circuit de réception où la lumière arrive par l'intermédiaire d'une fibre optique avec un état de polarisation arbitraire (et qui peut varier en fonction du temps), et doit être couplée aux guides d'onde du circuit photonique (réalisés selon les technologies de fabrication de circuits semiconducteurs, par exemple sur substrat de silicium).

La capacité d'un système à fibres optiques à transmettre correctement des données s'apprécie généralement à partir du taux d'erreur binaire (ou BER, de l'anglais « Bit Error Rate ») pour l'information binaire transmise. Le BER est l'inverse du rapport signal-sur-bruit (ou SNR, de l'anglais « Signal-to-Noise Ratio ») : par exemple un BER élevé signifie un SNR bas, et réciproquement. Le BER dépend, *in fine,* de la puissance optique du signal optique reçu au niveau du récepteur. Une puissance optique reçue trop élevée ou une puissance optique reçue pas assez élevée entraîneront dans les deux cas des taux d'erreur binaire élevés. Car dans le premier cas l'amplificateur de réception sature, et dans le second cas le bruit devient un problème car il interfère avec le signal utile.

La puissance optique au niveau du récepteur dépend de deux facteurs fondamentaux : combien de puissance est envoyée dans la fibre par l'émetteur et combien est perdue par l'affaiblissement dans l'installation de câble(s) de fibre optique qui relie l'émetteur au récepteur. C'est pourquoi, tous les fabricants de composants de liaison de données doivent spécifier la sensibilité du récepteur de leurs composants et la puissance minimum couplée dans la fibre depuis la source (cela peut être une puissance minimale requise), que tout concepteur ou fabricant de système de liaisons de données doit connaître ainsi que les conditions d'essai. Pour les composants de liaison de données, ces dernières comprennent notamment la fréquence d'entrée de données ou le taux binaire en entrée et le rapport cyclique, les tensions d'alimentation, et le type de fibre couplée à la source.

En résumé, tant pour le développement que pour le déploiement opérationnel d'un modèle de transceiver, il est important de caractériser de manière précise les pertes d'insertion (ou IL, de l'anglais "Insertion Loss") ainsi que la variation des pertes d'insertion en fonction de la polarisation incidente (PDL, de l'anglais "Polarisation Dépendent Loss").

La présente invention propose un dispositif de test qui permet de caractériser l'IL et la PDL d'un coupleur de type 2DGC d'une manière plus pratique et précise que les méthodes connues.

La méthode la plus répandue pour mesurer la PDL d'un composant optique est de mesurer sa transmission en fonction du temps en balayant tous les états de polarisation. Cette méthode, appliquée à un 2DGC est celle utilisée dans l'article scientifique par F. Van Laere et al., "Efficient Polarization Diversity Grating Couplers in Bonded InP-Membrane" IEEE Photonics Technol. Lett., vol. 20, no. 4, pp. 318-320, Feb. 2008, doi: 10.1109/LPT.2007.915587. Elle a l'avantage qu'à aucun moment, il est nécessaire de connaître l'état de polarisation incidente sur le dispositif à tester. Dans le cas d'un 2DGC, c'est la somme de l'intensité des deux sorties qui doit être considérée. La structure de test est constituée typiquement d'un 2DGC en entrée, d'une part, et soit d'un 2DGC identique ou de tout autre type de coupleur fibres ou bien de photodiodes intégrées au sein du circuit photonique en sortie, d'autre part. Cette méthode, pourtant simple en principe, a de nombreux inconvénients en pratique. Notamment :

- la polarisation doit être balayée pour chaque point en longueur d'onde. Le balayage d'un spectre (typiquement entre 10 et 10000 points en longueur d'onde) d'IL et de PDL peut prendre des minutes par composant, ce qui n'est pas compatible avec les tests en grande série ; et,
- il faut s'assurer que la puissance injectée ne varie pas en fonction de l'état de polarisation et de la longueur d'onde.

Une seconde méthode de caractérisation est connue de l'article scientifique par Mekis et al., "A Grating-Coupler-Enabled CMOS Photonics Platform" IEEE J. Sel. Top. Quantum Electron., vol. 17, no. 3, pp. 597-608, May 2011, doi: 10.1109/JSTQE.2010.2086049. Celle-ci dépend de la symétrie du composant qui fait que la lumière incidente peut être considérée comme une superposition linéaire de la lumière polarisée s (champ électrique perpendiculaire au plan d'incidence) et p (champ électrique parallèle au plan d'incidence). Ces deux états de polarisation représentent deux cas extrêmes, qui pour chaque longueur d'onde, déterminent la plage totale de valeurs de transmission en fonction de la polarisation (la PDL). Ainsi, la PDL du composant peut être évaluée en mesurant deux spectres de transmission, pour les polarisations incidentes, respectivement s et p. En principe donc, cette méthode résout le problème de la durée de mesure. Cependant, comme pour la première méthode, la précision avec laquelle la PDL peut être évaluée dépend de l'égalité de la puissance de la lumière injectée en $p$ et en $s$, ainsi que de la pureté de la polarisation incidente. En pratique, il est difficile de mettre en place un commutateur de polarisation qui soit satisfaisant à cet égard.

Le document US20120207428A1 divulgue un circuit intégré photonique pour le traitement d'un faisceau lumineux qui comprend un premier coupleur de type 2DGC pour coupler le faisceau lumineux, un second coupleur de type 2DGC pour coupler le faisceau lumineux et une structure de guide d'ondes ayant deux bras de guide d'ondes et distincts pour diviser le faisceau lumineux reçu du premier coupleur et recombiner le faisceau lumineux dans le second coupleur. Le rayonnement lumineux est couplé à l'entrée et à la sortie du circuit par des fibres optiques positionnées sur les coupleurs. Un dispositif de déphasage est en outre prévu pour générer un déphasage supplémentaire dans au moins l'un des deux bras distincts du guide d'ondes, produisant ainsi un déphasage relatif de π entre les deux bras distincts du guide d'ondes de manière à fournir un commutateur de polarisation TE/TM pour le rayonnement entre le premier coupleur et le second coupleur. Le circuit ainsi divulgué est un circuit à diversité de polarisations dans lequel un traitement optique peut être réalisé, par des processeurs photoniques agencés dans chacun des bras de guide d'ondes, respectivement. Le déphasage π introduit par le déphaseur disposé dans l'un des bras du guide d'onde, permet de commuter chaque polarisation en entrée vers la polarisation croisée, de sorte que le traitement optique qui est effectué entre les deux coupleurs, chacun pour une partie de la lumière incidente, devient indépendant des PDL après recombinaison dans le coupleur de sortie, étant donné que toute incidence des PDL dans un bras est compensée par une incidence inverse dans l'autre bras. Dit autrement, le circuit permet d'effacer l'effet des PDL du coupleur d'entrée, par le partage en deux composantes du rayonnement reçu au niveau dudit coupleur d'entrée et leur symétrisation (en terme de polarisation) grâce au déphaseur présent dans un bras et qui introduit un déphasage unique et fixe, égal à π, entre les composantes du rayonnement traitées dans les deux bras de guide d'onde, par les circuits photoniques intégrés, respectivement, avant leur recombinaison dans le coupleur de sorti. Ce circuit n'est pas adapté pour être utilisé comme circuit de test pour la caractérisation des PDL du coupleur de sortie.

L'article de Robert HALIR et al. "Reducing Polarization-Dependent Loss of Silicon-on-Insulator Fiber to Chip Grating Couplers", IEEE PHOTONICS TECHNOLOGY LETTERS, IEEE, USA, vol. 22, no. 6, 15 mars 2010 (2010-03-15), pages 389-391, ISSN: 1041-1135, DOI: 10.1109/LPT.2009.2039869 est un article scientifique dont les auteurs sont, pour certains, cités comme inventeurs dans la demande de brevet US20120207428A1 identifiée et discutée ci-dessus. Il divulgue sensiblement le même enseignement technique.

L'article de Zanyun ZHANG et al. intitulé "High-Efficiency Two-Dimensional Perfectly Vertical Grating Coupler With Ultra Low Polarization Dependent Loss and Large Fibre Misalignment Tolérance", IEEE JOURNAL OF QUANTUM ELECTRONICS, IEEE, USA, vol. 57, no. 5, 7 juillet 2021 (2021-07-07), pages 1-7, ISSN: 0018-9197, DOI: 10.1109/JQE.2021.3095289 a pour objet un coupleur 2DGC à quatre ports de type $1 \times 4$ (diviseur/mélangeur de puissance), destiné à réaliser de la modulation optique. La performance de ce coupleur est testée dans une configuration comprenant deux tels coupleurs 2DGC mis dos-à-dos et reliés par des bras de guides d'onde dans lesquels des déphaseurs sont présents, qui permettent d'égaliser la phase entre les différents bras.

L'article de Zanyun ZHANG et al., intitulé "Two-Dimensional Apodized Grating Coupler for Polarization-Independent and Surface-Normal Optical Coupling", JOURNAL OF LIGHTWAVE TECHNOLOGY, IEEE, USA, vol. 38, no. 15, 8 avril 2020 (2020-04-08), pages 4037-4044, ISSN: 0733-8724, DOI: 10.1109/JLT.2020.2986043 possède plusieurs auteurs en commun avec l'article de de Zanyun ZHANG et al., 2021, identifié et discuté ci-dessus. Ayant été publié un an avant, il rapporte les travaux de la même équipe de chercheurs à un stade antérieur. L'objet de ces travaux et par conséquent l'enseignement technique divulgué, est sensiblement le même. Dans cet article antérieur, les exemples d'applications envisagées du coupleur $1 \times 4$ étaient un polarimètre et un récepteur photonique sur puce indépendant de la polarisation, alors que l'article de de Zanyun ZHANG et al., 2021 mentionne un modulateur (mélangeur) de puissance optique.

**Résumé de l'invention**

L'invention vise à proposer une alternative aux méthodes de tests présentées ci-dessus, qui pallie tout ou partie des inconvénients précités.

Ce but est atteint, selon un premier aspect de l'invention grâce à une structure de test intégrée sur silicium pour la caractérisation de la perte dépendante de la polarisation, PDL, d'un coupleur optique fibre/silicium de type " 1 vers 2" à réseau de diffraction bidimensionnel, 2DGC, ayant une borne optique fibrée ainsi qu'une première borne optique guidée et une seconde borne optique guidée, ladite structure de test comprenant :

- un premier guide d'onde planaire ayant deux extrémités ;
- un second guide d'onde planaire ayant deux extrémités ;
- un coupleur optique fibre/silicium d'entrée ayant une borne optique fibrée, adapté pour recevoir un signal optique d'entrée via ladite borne optique fibrée, et des moyens de division optique associés qui sont adaptés pour diviser ledit signal optique d'entrée en deux composantes d'intensités optiques respectives égales, et qui sont agencés pour insérer chacune desdites composantes dans le premier guide d'onde planaire et dans le second guide d'onde planaire, respectivement, à une première extrémité respective desdits guides d'onde planaires ; et,
- le 2DGC sous test, agencé en tant que coupleur optique fibre/silicium de sortie avec ses deux bornes optiques guidées qui sont couplées à une seconde extrémité du premier guide d'onde planaire et du second guide d'onde planaire, respectivement, et configuré pour délivrer un signal optique de sortie sur sa borne optique fibrée.

La structure de test comprend, en outre :

- au moins un premier déphaseur réglable qui est agencé au niveau du premier guide d'onde planaire entre le coupleur optique d'entrée et le 2DGC sous test, et qui est configuré pour être piloté en sorte d'appliquer un décalage de phase déterminé entre 0 et $\pi$, en fonction d'un signal de réglage de déphasage, au signal optique se propageant dans ledit premier guide d'onde planaire, ledit décalage de phase étant un décalage de phase pur, c'est-à-dire sans variation d'intensité optique.

L'invention exploite le fait que l'intensité de la lumière qui se propage dans des guides d'onde planaire respectifs au niveau de chacune des sorties du 2DGC est identique lors de l'excitation du réseau de couplage d'entrée par une lumière polarisée purement en *p* ou purement en *s*, mais avec un décalage de phase de la propagation dans les deux guides qui est soit 0° soit 180° (valeurs 0 et $\pi$, respectivement, en radians) pour un champ électrique $\vec{E}$ d'excitation polarisé entièrement en s et entièrement en *p*, respectivement, et surtout sur l'observation que cette relation entre la phase en sortie et la polarisation en entrée est une relation continue et réciproque.

Certains aspects préférés mais non limitatifs de ce dispositif sont les suivants.

Dans des modes de réalisation, le coupleur optique d'entrée et ses moyens de division optique associés peuvent comprendre un coupleur optique fibre/silicium de type "1 vers 1" suivi d'un diviseur de puissance optique à une entrée et à deux sorties et avec division de puissance optique égale entre lesdites sorties, lesdites sorties étant couplées chacune à une des premières extrémités du premier guide d'ondes planaire et du second guide d'ondes planaire, respectivement.

Par exemple le coupleur optique fibre/silicium de type " 1 vers 1" peut être un coupleur à réseau de diffraction à une dimension, 1DGC.

Dans d'autres modes de réalisation, le coupleur optique d'entrée et ses moyens de division optique associés peuvent comprendre un second 2DGC, identique au 2DGC sous test, et ayant ses bornes optiques guidées qui sont couplées chacune à l'autre des extrémités du premier guide d'ondes planaire et du second guide d'ondes planaire, respectivement.

Dans des modes de réalisation, la structure de test comprend en outre un second déphaseur réglable, structurellement identique au premier déphaseur réglable, qui est agencé au niveau du second guide d'onde planaire entre le coupleur optique d'entrée et le 2DGC sous test, et qui est configuré de telle sorte qu'en permanence il n'applique aucun décalage de phase au signal optique se propageant dans ledit second guide d'onde.

Dans des modes de réalisation, le coupleur optique sous test et le coupleur optique d'entrée peuvent être agencés en symétrie l'un par rapport à l'autre, de telle manière qu'une fibre optique d'entrée puisse être raccordée à la borne optique fibrée du coupleur optique d'entrée et qu'une fibre optique de sortie puisse être raccordée à la borne optique fibrée du coupleur optique sous test, avec ladite fibre optique d'entrée et ladite fibre optique de sortie s'étendant en regard l'une de l'autre.

Dans d'autres modes de réalisation, le coupleur optique sous test et le coupleur optique d'entrée sont agencés en un bloc de telle manière qu'une fibre optique d'entrée puisse être raccordée à la borne optique fibrée du coupleur optique d'entrée et qu'une fibre optique de sortie puisse être raccordée à la borne optique fibrée du coupleur optique sous test, ladite fibre optique d'entrée et ladite fibre optique de sortie étant des fibres optiques d'un même réseau de fibres.

Le premier modulateur de phase peut avantageusement être un déphaseur à effet thermo-optique.

Un deuxième aspect de l'invention se rapporte à un équipement de test pour la caractérisation de la perte dépendante de la polarisation, PDL, d'un coupleur optique fibre/silicium de type "1 vers 2" à réseau de diffraction bidimensionnel, 2DGC, comprenant :

- une structure de test intégrée sur silicium selon le premier aspect ci-dessus, avec le coupleur 2DGC sous test agencé en tant que coupleur optique fibre/silicium de sortie de sortie de ladite structure de test intégrée ;
- un contrôleur de test,
- une source de lumière polarisée, et
- un capteur de lumière agencé pour mesurer la puissance optique en sortie du coupleur sous test, qui est la puissance optique transmise par la structure de test à partir de la puissance lumineuse injectée en entrée au niveau du coupleur d'entrée de ladite structure de test

dans lequel le contrôleur de test comprend un calculateur et une mémoire comprenant de la mémoire vive, et est configuré pour :

- causer l'insertion d'un signal optique d'entrée dans la borne optique fibrée du coupleur optique d'entrée de la structure de test ;
- piloter le déphaseur réglable de la structure de test en faisant faire varier un signal de réglage de déphasage dudit déphaseur de manière que le décalage de phase appliqué au signal optique se propageant dans le premier guide d'onde planaire de ladite structure de test balaie l'intervalle $[0;\pi]$ ; et dans le même temps,
- causer la mesure par le capteur de lumière et l'enregistrement dans la mémoire, de valeurs de la transmission à travers la structure de test en fonction de la valeur du décalage de phase
- déterminer la valeur maximale et de la valeur minimale des valeurs de la transmission mesurées et enregistrées ; et,
- obtenir la PDL comme étant la différence entre ladite valeur maximale et ladite valeur minimale.

Dans un mode de réalisation de l'équipement, la source de lumière polarisée et/ou le capteur de lumière peuvent être réalisés sur le même substrat de silicium, ou wafer, sur lequel la structure de test est réalisée.

Dans un troisième aspect, l'invention a également pour objet un procédé de caractérisation de la perte dépendante de la polarisation, PDL, d'un coupleur optique fibre/silicium de type "1 vers 2" à réseau de diffraction bidimensionnel, 2DGC, à l'aide d'une structure de test intégrée sur silicium selon le premier aspect ci-dessus, ledit procédé comprenant les étapes suivantes :

- insertion d'un signal optique d'entrée dans la borne optique fibrée du coupleur optique d'entrée ;

- mesure et enregistrement de valeurs de la transmission à travers la structure de test en fonction de la valeur du décalage de phase appliqué au signal optique se propageant dans le premier guide d'onde planaire par le déphaseur réglable, alors que le signal de réglage de déphasage dudit déphaseur est varié de manière que ledit décalage de phase balaie l'intervalle $[0;\pi]$ ;

- détermination de la valeur maximale et de la valeur minimale des valeurs de la transmission mesurées et enregistrées ; et,

- obtention de la PDL comme étant la différence entre ladite valeur maximale et ladite valeur minimale.

Un quatrième et dernier aspect de l'invention se rapporte à un produit programme d'ordinateur comprenant une ou plusieurs séquences d'instructions stockées sur un support de mémoire lisible par une machine comprenant un processeur, lesdites séquences d'instructions étant adaptées pour réaliser toutes les étapes du procédé selon le deuxième aspect de l'invention lorsque le programme est lu dans le support de mémoire et exécuté par le processeur.

**Présentation des dessins**

D'autres caractéristiques et avantages de l'invention apparaîtront encore à la lecture de la description qui va suivre. Celle-ci est purement illustrative et doit être lue en regard des dessins annexés dans lesquels :

- [Figure 1] est une représentation schématique d'un cas d'usage de coupleurs 2DGC pour la transmission optique de données à travers une fibre optique ;

- [Figure 2] est un schéma simplifié d'un exemple de coupleur 2DGC selon une vue en perspectives isométriques simplifiée ;

- [Figure 3] montre des représentations schématiques simplifiées de trois structures de test classiques pour mesurer la PDL d'un 2DGC ;

- [Figure 4] est une Illustration de la méthode de mesure de la PDL d'un 2DGC avec une structure de test classique de la Figure 3 ;

- [Figure 5A] et [Figure 5B] sont des illustrations de la relation réciproque entre la polarisation de la lumière en entrée, d'une part, et le déphasage entre les deux sorties, d'autre part d'un coupleur fibre/silicium de type 2DGC ;

- [Figure 6A] et [Figure 6B] sont des schémas simplifiés de deux variantes de la structure de test proposée, convenant pour une utilisation avec des fibres séparées en entrée et en sortie ;

- [Figure 7A] et [Figure 7B] sont des schémas simplifiés de deux variantes des structures de test de la [Figure 6A] et de la [Figure 6B], respectivement, convenant pour une utilisation avec des fibres en entrée et en sortie qui sont agencées en bloc unitaire (de type "fibre array") ;

- [Figure 8A] et [Figure 8B] sont des représentation schématiques et fonctionnelles illustrant de la méthode de mesure de la PDL d'un 2DGC avec la structure de test proposée, et avec un équipement de test adapté pour la mise en oeuvre de la méthode ;

- [Figure 9] est un schéma simplifié d'une autre variante de la structure de test avec un diviseur de puissance optique en entrée ; et,

- [Figure 10] est un diagramme d'étapes illustrant la mise en oeuvre des étapes du procédé de l'invention.

**Description des modes de réalisation**

Dans la description de modes de réalisation qui va suivre et dans les figures des dessins annexés, les mêmes éléments ou des éléments similaires portent les mêmes signes de référence.

En physique ondulatoire (ou vibratoire), l'onde électromagnétique est un modèle utilisé pour étudier les rayonnements électromagnétiques. Il convient de bien distinguer le rayonnement électromagnétique, qui est le phénomène étudié, et l'onde électromagnétique, qui est une des représentations du phénomène. Une autre représentation, à savoir la représentation corpusculaire (ou quantique), prend en compte l'existence du photon, et n'est pas considérée ici.

Comme toutes les ondes, une onde électromagnétique peut s'analyser en utilisant l'analyse spectrale, c'est-à-dire qu'on peut décomposer une onde ayant une certaine largeur spectrale (*i.e.*, un spectre fréquentiel comprenant plusieurs longueurs d'ondes distinctes) en une somme d'ondes ayant chacune une unique longueur d'onde déterminée, dites ondes "monochromatiques". La lumière est ainsi faite d'ondes électromagnétiques, c'est-à-dire de vibrations à une ou plusieurs longueurs d'ondes dans le spectre de fréquences visible, soit environ entre les longueurs d'onde 400 et 800 nm.

Physiquement parlant, une onde électromagnétique est un champ, c'est-à-dire une zone de l'espace dont les propriétés sont modifiées. On affecte alors à chaque point de l'espace une grandeur physique vectorielle, *i.e.*, un vecteur qui représente non seulement l'amplitude du champ concerné mais également l'orientation dudit champ dans l'espace. Cette orientation est représentée, pour chaque vibration à une longueur d'onde déterminée, par l'orientation du vecteur associé par rapport à un référentiel {X,Y,Z}, communément le référentiel terrestre lié au sol de la Terre. Les ondes lumineuses sont des ondes vectorielles, c'est-à-dire des ondes qui peuvent osciller selon plus d'une orientation.

Une onde électromagnétique représente la propagation d'un champ électrique et d'un champ magnétique associés, perpendiculaires entre eux et à la direction de la propagation de l'onde. Comme toute onde électromagnétique qui se propage, en effet, une onde lumineuse est définie par la perturbation locale du champ électrique (communément noté « E », cette lettre étant surmontée d'une flèche pour désigner plus spécifiquement le vecteur associé audit champ : $\vec{E}$) et du champ magnétique (communément noté « B », cette lettre étant surmontée d'une flèche pour désigner le vecteur associé audit champ : B). La perturbation est initialement produite par des particules chargées qui sont accélérées, mais elle peut se propager à travers un milieu de propagation éventuellement dépourvu de particules (comme le vide spatial par exemple). Dans le cas d'une onde plane, qui est une bonne approximation de la plupart des ondes lumineuses, chacun des vecteurs $\vec{E}$ et $\vec{B}$ oscille dans un seul et même plan respectif, lesquels plans sont tous deux perpendiculaires à la direction de propagation rectiligne (communément représentée par un vecteur $\vec{V}$ dans le référentiel terrestre {X,Y,Z} lui aussi). Dans l'étude des ondes électromagnétiques, et donc en particulier dans celle de la lumière, il est d'usage, par convention, d'ignorer le champ magnétique $\vec{B}$ car ses variations peuvent être déterminées à partir de celles du champ électrique $\vec{E}$ qui leur sont liées à travers les équations de Maxwell. On considérera donc uniquement le champ électrique $\vec{E}$ dans ce qui suit.

La polarisation est une propriété qu'ont les ondes vectorielles de présenter une répartition privilégiée de l'orientation, dans l'espace, des vibrations qui les composent. Par exemple, les ondes sonores n'ont pas cette propriété car ce sont des ondes longitudinales : elles se propagent via des molécules d'air qui entrent en collision avec des molécules d'air voisines, le mouvement local de ces molécules se faisant dans la même direction que la propagation de l'énergie. A l'inverse, les ondes lumineuses ont des propriétés de polarisation, car l'orientation du champ électrique $\vec{E}$ est transverse à celle de la propagation de l'onde. Concrètement, la polarisation de la lumière correspond à la direction du champ électrique $\vec{E}$.

La polarisation est rectiligne lorsque $\vec{E}$ est toujours orienté selon la même direction. Par convention, la polarisation rectiligne est dite verticale (polarisation verticale) lorsque le vecteur champ électrique vecteurs $\vec{E}$ est vertical par rapport au repère {X,Y,Z}. De même, la polarisation rectiligne est dite horizontale (polarisation horizontale) lorsque le vecteur champ électrique $\vec{E}$ est horizontal par rapport audit repère {X,Y,Z}. Dans les deux cas, le vecteur $\vec{E}$ est perpendiculaire à la direction de propagation V. Pour une onde non polarisée, ou naturelle, $\vec{E}$ tourne autour de son axe de façon arbitraire et imprévisible au cours du temps. Polariser une onde lumineuse correspond à donner une trajectoire définie au champ électrique $\vec{E}$. Une fois donnée, la polarisation d'une onde lumineuse peut être conservée ou être modifiée, selon les conditions de la propagation de l'onde.

Divers phénomènes affectent en effet le comportement ondulatoire de la lumière lors de sa propagation. Dans un milieu homogène et isotrope (c'est-à-dire dont les propriétés physiques sont invariantes en fonction de la direction), l'onde électromagnétique se propage en ligne droite. Par contre, en cas de rencontre avec un obstacle, il y a diffraction (*i.e.*, diffusion de l'onde par les divers points de l'objet, qui se manifeste par des phénomènes d'interférence c'est-à-dire des combinaisons de deux ondes induites qui sont de même fréquence mais ont, entre elles, des déphasages c'est-à-dire des écarts de phase). En outre, lors d'un changement de milieu de propagation, il y a réflexion (une partie de l'onde électromagnétique repart vers le milieu d'origine) et réfraction (une autre partie de l'onde se propage à travers le second milieu, mais avec une direction différente). Il y a aussi réfraction si les propriétés du milieu de propagation changent selon l'endroit (hétérogénéité).

La réflexion de la lumière sur certains matériaux transforme sa polarisation. Pour le comprendre et en rendre compte, on décompose la polarisation de la lumière en deux polarisations rectilignes orthogonales entre elles, notées *s* et *p*. La polarisation *s* est la composante du champ électrique qui est perpendiculaire au plan d'incidence de l'onde, et la polarisation *p* est la composante du champ électrique qui est contenue dans ce plan. La lumière est plus ou moins réfléchie selon qu'elle est polarisée *s* ou *p*, et selon l'angle d'incidence (*i.e.*, l'angle entre la direction de propagation de l'onde incidente et la direction normale au plan de l'interface réfléchissante considérée comme localement plane).

L'augmentation des débits de transmission de données sur les réseaux de communication optiques et l'utilisation du multiplexage par répartition en longueur d'onde (ou WDM, de l'anglais "Wavelength Division Multiplexing") a pour conséquence de rendre les systèmes d'autant plus sensibles aux phénomènes précités tels que la dispersion chromatique ou la polarisation. Cela implique, d'une manière générale, que les caractéristiques des composants optiques qui constituent le réseau soient contrôlées dès la phase de conception, et pris en compte pour améliorer et le design de ces composants. Ceci concerne en particulier les caractéristiques des coupleurs optiques en circuits intégrés sur substrat de silicium (ou autre) à l'interface entre la fibre optique et un (ou plusieurs) guide(s) d'onde réalisé sur une plaquette de silicium (« wafer » en anglais) selon les technologies de la microélectronique sur substrat de silicium.

Les pertes qui dépendent de la polarisation (ou perte PDL) sont définies comme la variation maximale de la puissance transmise par un composant optronique ou tout autre dispositif optique, lorsque l'état de polarisation d'entrée (SOP, de l'anglais "State of Polarization") est modifié sur l'ensemble des états de polarisation possibles.

Les réseaux de fibres (ou réseaux de fibres optiques ou unités de réseaux de fibres) sont des réseaux unidimensionnels ou bidimensionnels de fibres optiques. Souvent, un tel réseau n'est formé qu'à l'extrémité d'un faisceau de fibres, plutôt que sur toute la longueur de la fibre. L'objectif d'un tel réseau est généralement de coupler la lumière d'un réseau de sources aux fibres, ou des fibres à un autre composant, tel qu'un réseau de guides d'ondes planaires sur un circuit intégré photonique.

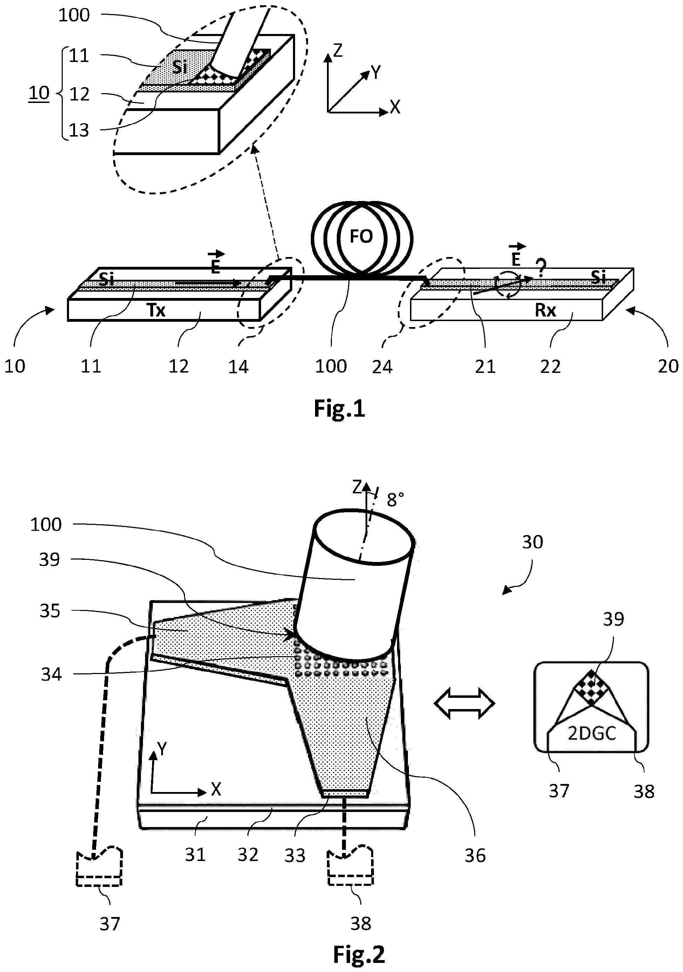

Le schéma simplifié de la Figure 1, illustre un cas d'usage de tels coupleurs optiques intégrés, à savoir un coupleur 10 de transmission (Tx) et un coupleur 20 de réception (Rx).

On définit ici et pour la suite de la description un repère direct tridimensionnel orthogonal {X, Y,Z}, où les axes X et Y forment un plan parallèle au plan principal de la plaque ("wafer") formant le substrat plan, et où l'axe Z est orienté de manière sensiblement orthogonale au plan principal de la plaque, cet axe Z étant orienté suivant la direction de l'axe de la gravité. Dans la suite de la description, les termes "vertical » et "verticalement" s'entendent comme étant relatifs à une orientation sensiblement parallèle à l'axe Z, et les termes "horizontal" et "horizontalement" comme étant relatifs à une orientation sensiblement parallèle au plan (X,Y). Par ailleurs, les termes "dessus" et "dessous" ainsi que leurs dérivés (comme "au-dessus" et "au-dessous", ou "pardessus" et "par-dessous"), ainsi également que les termes "inférieur" et "supérieur", utilisés pour qualifier un élément de la microstructure considérée, s'entendent comme étant relatifs à un positionnement croissant lorsqu'on s'éloigne du wafer vers le haut, *i.e.*, suivant la direction verticale +Z.

Chacun des coupleurs 10 et 20 comprend un guide d'onde 11 ou 21, respectivement, réalisé en silicium sur un substrat à base de silicium dopé 12 ou 22, respectivement. Il comprend aussi un réseau de couplage (*i.e.,* un réseau de diffraction), réalisé par exemple par une couche de silicium (Si) avec des motifs gravés, sur une couche de dioxyde de silicium (SiO2), à une première extrémité 14 ou 24 du guide d'onde 11 ou 21, respectivement. Cette première extrémité du guide d'onde 11 ou 21 de chacun des coupleurs 10 et 20, respectivement, est le seuil du couplage optique dudit coupleur avec une extrémité respective d'une fibre optique 100. La fibre 100, par exemple une fibre de type Smf28™ ou autre, relie les coupleurs optiques 10 et 20 et est adaptée pour la transmission de données entre lesdits coupleurs. La transmission de données peut être unidirectionnelle ou bidirectionnelle, monochromatique (*i.e.*, sur une longueur d'onde unique) ou avec multiplexage de plusieurs longueurs d'onde (WDM). Généralement, l'onde lumineuse est polarisée en entrée de la fibre 100, au niveau du coupleur de transmission 10. Par contre, la polarisation de la lumière à l'autre extrémité de la fibre, au niveau du coupleur de réception 20 est variable et instable, et par conséquent inconnue.

A la figure 1, le détail de la zone de couplage 14 montre le motif d'un réseau de couplage 13 assurant l'interface optique entre le guide d'onde 11 du coupleur optique 10 et l'extrémité concernée de la fibre optique 100. Ledit motif forme un réseau de trous (emplis de SiO2) espacés suivant les directions X et Y qui définissent un plan parallèle à la surface des substrats 11 et 21, respectivement, avec un pas déterminé. Ce pas, ainsi que la forme des trous peuvent être non-uniformes à travers la surface du réseau. Le pas et la forme des trous déterminent le comportement du réseau, et notamment les caractéristiques du couplage en termes de longueur d'onde et de polarisation. Notamment, le réseau de couplage au niveau du coupleur 20 de réception peut être insensible à la polarisation de la lumière entrante. En outre, et le cas échéant, plusieurs réseaux de couplage comparables au réseau 13 peuvent être juxtaposés dans le plan X,Y et/ou empilés suivant la direction Z, et posséder chacun un pas de réseau distinct de celui des autres pour assurer un couplage de longueurs d'onde multiples.

Bien entendu, les circuits intégrés qui embarquent les coupleurs optiques 10 et 20 peuvent comprendre des circuits photoniques conçus et adaptés pour traiter le signal optique (en émission ou en réception, respectivement) et réaliser par exemple un filtrage, une amplification, une modulation ou une démodulation, un multiplexage ou un démultiplexage, etc. En outre, les données transmises ou reçues par les coupleurs optiques 10 et 20, respectivement, peuvent être traitées par des dispositifs microélectroniques réalisés sur le même substrat que ces derniers et donc compris dans le même boîtier de circuit intégré (« packaging » en anglais). Les données peuvent sinon être reçues de ou transmises à, respectivement, d'autres circuits électroniques intégrés qui sont dédiés à ce traitement dans un système de traitement de données quelconque, propre à chaque application.

Comme indiqué en introduction, certains coupleurs optiques sont conçus pour assurer les deux types de couplage, en transmission (Tx) et en réception (Rx), simultanément pour une communication de données via une même et unique fibre optique. Ils sont appelés "transceiver" dans le jargon de la personne du métier, et ceux qui intéressent les modes de réalisation de l'invention sont les coupleurs à réseau de diffraction bidimensionnel qui sont des coupleurs fibre/silicium à diversité de polarisation connus sous le nom acronymique de 2DGC ou PSGC (de l'anglais "Polarisation Splitting Grating Coupler"). Ils sont généralement spécifiés pour une plage de longueurs d'onde relativement étroite (quelques dizaines de nanomètres pour les plus larges). Ce type de coupleurs est fréquemment utilisé en photonique, et présentent une borne fibrée (c'est-à-dire couplée ou susceptible d'être couplée à une fibre optique) et deux bornes guidées (c'est-à-dire couplées chacun à un guide d'onde planaire sur silicium) selon une structure "1 par 2" (notée $1 \times 2$), ou structure en "Y" (appelée "T-coupler" en anglais, qui signifie coupleur en té).

Un exemple de coupleur 2DGC est représenté à la Figure 2 selon une vue en perspectives isométriques simplifiée. La partie gauche de la figure montre schématiquement un exemple de réalisation d'un tel coupleur 30 sur un substrat, alors que la partie droite de la figure montre sa représentation symbolique telle qu'utilisée ensuite dans les autres figures des dessins.

Le coupleur 30 comprend un substrat 31, par exemple un substrat à base de silicium comme un substrat de silicium massif ("bulk"), ou un substrat de silicium sur isolant (ou SOI, de l'anglais "Silicon-on-Insulator"). Il comprend ensuite une couche intercalaire 32, par exemple une couche d'oxyde de silicium ou silice (SiO2) déposée directement sur le substrat 31, ainsi qu'une couche de couplage 33, par exemple en nitrure de silicium ($Si_xN_y$), par exemple du $Si_3N_4$. Enfin, une couche d'encapsulation (non représentée), par exemple une couche de silice (SiO2) de 1 µm d'épaisseur, recouvre l'empilement précité du substrat 31, de la couche intercalaire et de la couche de couplage 33.

Le matériau de la couche de couplage 33 déposé sur le substrat 31 est d'indice de réfraction substantiellement supérieur à celui de la couche intercalaire 32 dudit substrat 31 de manière à assurer le guidage de la lumière par réflexion totale. La couche de couplage 33 en silicium (Si) est doublement gravée, selon les technologies classiques de fabrication des circuits intégrés (basées sur la photolithographie), pour former un réseau de couplage optique 34 et des guides d'onde planaires 35 et 36.

D'une part, en effet la couche de couplage 33 est gravée au niveau d'une zone de couplage 34 proprement dite, pour former un réseau bi-dimensionnel de motifs, en l'occurrence des renfoncements ou cuvettes (*i.e.*, des trous non-traversants) opérant comme des éléments d'un réseau de diffraction ("grating" en anglais). Ce réseau de motifs constitue en effet le réseau de couplage pour le couplage optique de la couche de couplage 33 à une fibre optique 100. L'interface de couplage optique au niveau de la zone de couplage 34 au niveau de laquelle la fibre optique 100 peut être couplée, constitue donc la borne fibrée du coupleur 30. Dans un exemple, la couche de couplage 33 présente une épaisseur de 300 nm environ et les motifs du réseau de couplage 34 sont gravés jusqu'à une profondeur de 150 nm, par exemple, à partir de la surface supérieure de la couche de couplage 33. Cet exemple n'est pas limitatif. La section de ces motifs dans un plan orthogonal à la direction verticale Y (et donc leur forme en vue de dessus) peut être circulaire, carrée, en forme de carrés pincés, de losanges, etc. Les motifs sont répartis en lignes et en colonnes dans le plan X,Y selon un maillage carré, c'est-à-dire avec une périodicité d'ordre deux, et avec des pas de répartition selon les deux directions X et Y du plan, respectivement, qui sont identiques. La personne de métier appréciera que les motifs ainsi gravés à une profondeur de 150 nm sont ensuite emplis du matériau de la couche d'encapsulation qui recouvre la couche de couplage 33. Dans l'exemple représenté, la zone de couplage optique 34 présente une forme carrée, vue de dessus. Elle peut aussi être rectangulaire.

La couche de couplage 33 est par ailleurs gravée pour former deux guides d'onde planaires 35 et 36 intégrés sur silicium, qui s'étendent chacun à partir de côtés adjacents respectifs de la zone de couplage 34, orthogonalement entre eux (c'est-à-dire en formant un angle de 90° ou $\pi/2$ entre eux). Ainsi, dans l'exemple montré à la figure 2, le premier guide d'onde 35 s'étend longitudinalement suivant la direction X à partir d'un premier côté de la zone de couplage 34 vers la gauche de la figure, alors que le second guide d'onde 36 s'étend transversalement suivant la direction Y à partir d'un second côté de la zone de couplage 34, adjacent audit premier côté, vers le bas de la figure. Ces guides d'onde sont adaptés au guidage de la lumière dans le coupleur 30, à la longueur d'onde considérée. Le couplage optique entre la fibre 100 et les guides d'onde 35 et 36 s'effectue par diffraction, la lumière étant diffusée au niveau de chacun des éléments de réseau gravés dans la zone de couplage 34. Ainsi qu'on l'a compris, des extrémités des guides d'onde 35 et 36 opposées à la zone de couplage 34 constituent les bornes optiques guidées du coupleur 30.

Ces coupleurs fonctionnent par séparation en Y : la répartition des puissances dans les deux bras fils dépend de l'angle qu'ils font avec le bras mère et de la polarisation en entrée. Ainsi, si les deux angles sont égaux, la division de puissance est 50/50 pour les états de polarisation purement s et purement p. On dit alors qu'on a un coupleur 50/50. Ces coupleurs peuvent être réversibles, en ce sens que le comportement est entièrement réciproque. En effet, un signal optique d'entrée peut être inséré via la borne optique fibrée 39, et divisé en deux composantes guidées vers les bornes guidées 37 et 38, respectivement. Dans ce cas, la borne optique fibrée 39 est une borne d'entrée et les bornes optiques guidées 37 et 38 sont des bornes de sortie. On parle alors de coupleur de division ("splitter" en anglais). Mais, inversement, deux signaux optiques distincts peuvent être insérés dans le coupleur via les bornes optiques guidées 37 et 38, un signal optique résultant de la combinaison optique desdits signaux optiques étant délivré par la borne optique fibrée 39. Dans ce cas, les bornes optiques guidées 37 et 38 sont des bornes d'entrée et la borne optique fibrée 39 est une borne de sortie. On parle alors de coupleur de mélange ("mixer" en anglais).

Dans les circuits récepteurs de liaison de données photoniques au silicium, les coupleurs "1 par 2" du type à réseau de couplage bidimensionnel (2DGC) tels que présentés dans ce qui précède, sont utilisés pour coupler efficacement la lumière qui entre dans le circuit photonique avec un état de polarisation arbitraire.

Le point d'insertion (c'est-à-dire le point où la fibre optique d'entrée s'interface avec le réseau de couplage) peut être représenté, en coupe horizontale vue de dessus, par un ovale. Un ovale est en effet la figure d'intersection entre un plan (celui du réseau 34) et un cylindre (celui de la fibre optique 100) lorsque l'axe longitudinal dudit cylindre est incliné suivant la direction Z normale audit plan (l'inclinaison étant ici de 8°, conformément à un standard de l'industrie).

Comme tout composant optique passif réel, un coupleur de type 2DGC présente des pertes d'insertion, même très faibles. La perte d'insertion d'un composant optique quantifie la puissance perdue par un signal optique lorsqu'il traverse ce composant. Si $P_i$ est la puissance initiale entrante du signal optique et $P_f$ la puissance finale sortante, alors on définit la perte d'insertion II, comme étant, en échelle logarithmique :

[Math 1]

$$IL_{dB} = 10 \times log\left(\frac{P_f}{P_i}\right) = 10 \times log(T) \qquad \text{Equation (1)}$$

où T est le coefficient de transmission (aussi appelé "transmission" par raccourci), donné par T = $\frac{P_f}{P_i}$

Le facteur de transmission dépend de la polarisation de la lumière. La perte dépendante de la polarisation est la grandeur physique qui quantifie ce phénomène. Elle est donnée par la différence entre le coefficient de transmission maximum $T_{max}$ et le coefficient de transmission minimum $T_{min}$, et est définie en échelle logarithmique par :
[Math 2]

$$PDL_{dB} = 10 \times log\left(\frac{T_{max}}{T_{min}}\right) \qquad \text{Equation (2)}$$

Dans un coupleur de type 2DGC, la perte dépendante de la polarisation (PDL), provient essentiellement de l'angle non nul de la fibre 100, qui est prévu pour réduire les réflexions à l'interface entre la fibre optique 100 et le réseau de couplage gravé sur silicium au niveau de la zone de couplage 34.

Caractériser la PDL d'un 2DGC est assez critique, car la PDL se manifeste par du bruit optique, qu'on fait tout pour diminuer au niveau du design des structures photoniques et du choix des matériaux qui les constituent. Mais elle est surtout difficile à évaluer en conditions opérationnelles, la perte d'insertion II, étant plus facile à évaluer. En pratique le niveau d'incertitude est assez élevé pour des mesures directes de la PDL. Il y a aussi une contrainte liée à la rapidité de l'évaluation, qui doit être élevée pour satisfaire les exigences d'une mise en oeuvre industrielle.

La caractérisation de la perte dépendante de la polarisation (PDL) d'un coupleur de type 2DGC destiné à être utilisé côté transmission (Tx) dans une architecture de transmission optique telle que montrée à la figure 1 ne présente pas de difficulté particulière, car on connaît et on maîtrise l'état de polarisation de la lumière. Mais ce n'est pas la même chose pour un coupleur 2DGC destiné à être utilisé du côté réception (Rx), car l'état de polarisation peut varier à tout moment, et d'une manière arbitraire.

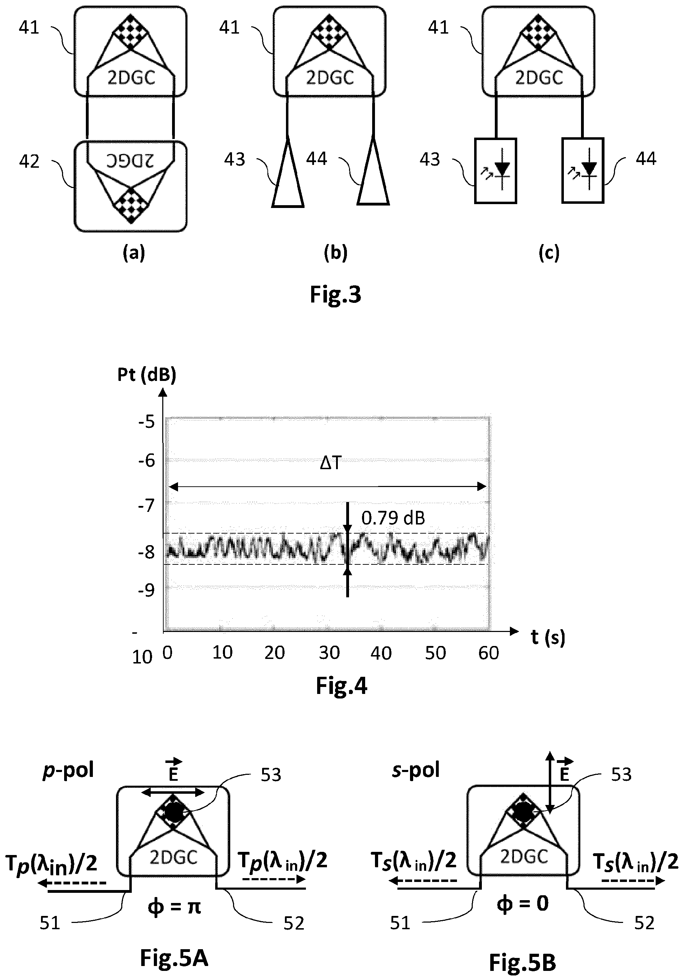

La Figure 3 montre trois exemples connus d'une structure de test d'un coupleur de type 2DGC, qui peuvent être utilisées pour caractériser la PDL d'un coupleur de type 2DGC. Dans ces exemples, on considère un coupleur 41 de type 2DGC dont les pertes dépendant de la polarisation (PDL) doivent être mesurées pour une utilisation du coupleur en réception (Rx). Une structure de test connue est constituée typiquement du coupleur 2DGC à tester 41, qui est agencé en entrée, ainsi que d'un coupleur 42 identique audit coupleur 41 à tester, qui est agencé en sortie comme dans l'exemple (a) montré à gauche de la figure. Les deux coupleurs sont agencés dos-à-dos, leurs bornes optiques guidées (bornes 37 et 38 de la figure 2) étant couplées deux-à-deux par deux guides d'onde planaires respectifs. La borne optique fibrée (borne 39 de la figure 2) du coupleur 41 à tester est configurée en entrée optique, adaptée pour recevoir un signal optique d'entrée par l'intermédiaire d'une fibre optique d'entrée. La borne optique fibrée du coupleur 42 miroir est configurée en sortie optique, adaptée pour délivrer un signal optique de sortie par l'intermédiaire d'une fibre optique de sortie. Une telle structure de test a été utilisée, par exemple, dans les travaux d'étude ayant conduit à la publication de l'article scientifique par S. Plantier et al., "Impact of scattering element shape on polarisation dependent loss in two dimensional grating couplers", IEEE 13th International Conférence on Group IV Photonics (GFP), August 2016, doi:10.1109/GROUP4.2016.7739057.

Dans un autre exemple (b) de structure de test connue montré au centre de la Figure 3, au lieu d'un autre 2DGC comme le coupleur 42 de l'exemple (a), on arrange ici un autre type de coupleur(s) silicium/fibre en sortie, par exemple un coupleur 43 et un coupleur 44 chacun dans une branche de sortie du coupleur 2DGC à tester 41. Les coupleurs 43 et 44 peuvent être des coupleurs à une entrée et à une seule sortie de type 1DGC.

Dans un troisième exemple (c) montré à droite de la Figure 3, on arrange directement des photodiodes au niveau des sorties respectives du coupleur à tester 41, lesquelles peuvent par exemple être intégrées au sein de la structure de test sur le même substrat de silicium.

Dans tous les cas, c'est la somme de l'intensité T1 et de l'intensité T2 du champ électrique se propageant depuis les deux sorties respectives du 2DGC qui doit être considérée. A cet effet, dans le cas des structures (b) et (c) de la Figure 3, un capteur de l'intensité transmise est prévu en sortie de chacune des branches, et les valeurs qu'ils mesurent sont sommées. Les PDL peuvent être mesurées par tous dispositifs de mesure connus, par exemple les dispositifs basés sur une mesure en réflexion ou en transmission en appliquant la méthode de la matrice de Jones, la méthode de la matrice de Mueller, etc.

En référence à l'illustration donnée par le graphe de la Figure 4, une méthode de mesure de la PDL d'un 2DGC avec l'une quelconque des structures de test classiques de la Figure 3, consiste à mesurer la transmission de ce composant optique sur un intervalle de temps ΔT déterminé, pendant lequel on s'assure de balayer tous les états de polarisation possibles entre les polarisations *s* et *p*. Il s'agit de la méthode de balayage de la polarisation décrite dans l'article scientifique F. Van Laere et al. de 2008, cité en introduction. Dans l'exemple montré à la Figure 4, ΔT est égale à 60 secondes, et l'écart maximum de transmission qui est relevé est égal à 0.79 décibels (dB).

Cette méthode, a l'avantage qu'à aucun moment il n'est nécessaire de connaître l'état de polarisation incidente sur le dispositif à tester. Mais elle a aussi de nombreux inconvénients en pratique, comme déjà mentionné en introduction. Notamment :

- la polarisation doit être balayée pour chaque point en longueur d'onde, ce qui peut prendre des minutes par composant, et n'est pas compatible avec les tests en grande série.

- il faut s'assurer que la puissance injectée ne varie pas en fonction de l'état de polarisation en *s* et/ou en *p* et de la longueur d'onde λ.

Les modes de réalisation de la structure de test selon l'invention utilisent une autre approche, basée sur observation faite par les inventeurs.

La Figure 5A et la Figure 5B donnent une illustration de la relation réciproque qui a été observée et étudiée par les inventeurs pour un coupleur 50 de type 2DGC, entre la polarisation de la lumière sur l'entrée de couplage 53, d'une part, et le déphasage entre les deux sorties 51 et 52, d'autre part. On considère une onde lumineuse monochromatique de longueur d'onde $\lambda_{in}$ déterminée introduite dans l'entrée 53, par exemple par l'intermédiaire d'une fibre optique couplée au réseau de couplage de l'entrée 53 du coupleur 50.

Dans le cas de la Figure 5A, le champ électrique $\vec{E}$ incident est entièrement polarisé *p*. Si la puissance optique de l'onde incidente est $T_p(\lambda_{in})$, les ondes lumineuses respectivement diffusées dans des guides d'onde respectifs auxquels les sorties 51 et 52 sont couplées ont une puissance optique transmise qui est égale à la moitié de $T_p(\lambda_{in})$. Dit autrement, la puissance optique propagée dans chacune des branches de sortie du coupleur est alors égale à $T_p(\lambda_{in})/2$. Le déphasage $\phi$ entre ces deux propagations est égal à $\pi$ (i.e., $\phi=\pi$). Dit autrement encore, l'onde incidente reçue en entrée 53 est divisée en deux ondes propagées via les sorties 51 et 52 sorties avec une puissance partagée à 50/50 et avec un déphasage relatif $\phi$ égal à $\pi$ ($\phi=\pi$).

Dans le cas maintenant de la Figure 5B, le champ électrique $\vec{E}$ incident est entièrement polarisé *s*. Si la puissance optique de l'onde incidente est $T_S(\lambda_{in})$, les ondes lumineuses respectivement diffusées dans des guides d'onde respectifs auxquels les sorties 51 et 52 sont couplées ont une puissance optique transmise qui est toujours égale à la moitié de $T_S(\lambda_{in})$. Dit autrement, la puissance optique propagée dans chacune des branches de sortie du coupleur est alors égale à $T_S(\lambda_{in})/2$. Mais le déphasage $\phi$ entre ces deux propagations est cette fois-ci égal à zéro (i.e., $\phi=0$). Dit autrement encore, l'onde incidente reçue en entrée 53 est divisée en deux ondes propagées via les sorties 51 et 52 toujours avec une puissance partagée à 50/50, mais avec un déphasage relatif $\phi$ égal à 0 ($\phi=0$) c'est-à-dire sans déphasage.

Dans un cas intermédiaire entre ceux de la Figure 5A et de la Figure 5B dans lequel l'onde incidente reçue sur entrée 53 a une polarisation mixte *p* et *s*, la puissance de l'onde incidente est partagée de manière inégale entre les sorties 51 et 52, et avec un déphasage entre les deux ondes lumineuses ainsi transmises qui prend une valeur intermédiaire entre 0 et $\pi$.

Mais ce qui a été observé, c'est non seulement la continuité du phénomène pour tout état de polarisation mixte *s* et *p* entre les états de polarisation purement *s* et purement *p* qui est mentionnée ci-dessus, mais aussi et surtout la réciprocité de ce phénomène. En effet :

- si on force entre les sorties 51 et 52 un déphasage $\phi$ égal à $\pi$, alors la polarisation en entrée est une polarisation entièrement p ;
- si on force entre les sorties 51 et 52 un déphasage $\phi$ égal à 0, alors la polarisation en entrée est une polarisation entièrement s ; et, plus généralement,
- si on impose entre les sorties 51 et 52 une phase $\phi$ déterminée dont la valeur est comprise entre 0 et $\pi$, alors la polarisation de la lumière sur l'entrée 53 est une polarisation intermédiaire en s et p, et la relation entre ladite phase et ladite polarisation est une relation réciproque, c'est-à-dire qu'elle suit une fonction continue et bijective.

Dit autrement, il a été observé que, par réciprocité, modifier la relation de phase entre les deux ondes de sortie d'un coupleur silicium-fibre de type 2DGC à une entrée et deux sorties, revient à modifier l'état de polarisation du signal optique sur l'entrée. Le principe de la mise en oeuvre de l'invention repose sur la capacité à générer un déphasage entre les deux bras de la structure de test de la Figure 3, version (a) par exemple, afin d'émuler un balayage de la polarisation du signal optique injecté/émis sans avoir à contrôler la polarisation de celui-ci.

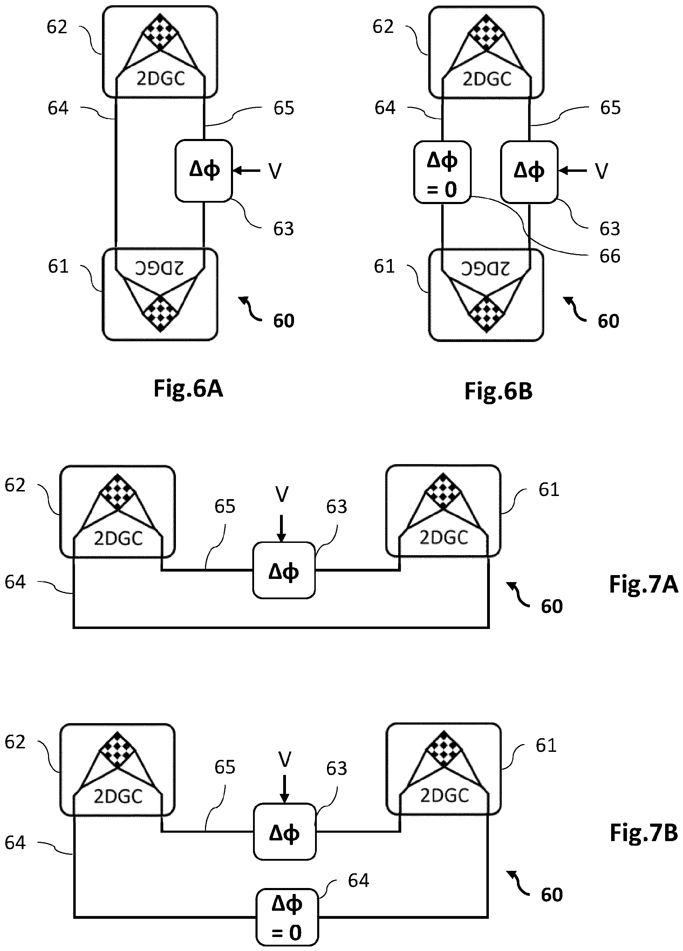

Plus particulièrement, la structure de test 60 selon la Figure 6A est similaire à l'exemple (a) de la Figure 3, mais est modifiée pour permettre de mesurer la PDL du 2DGC sous test en contournant le besoin de changer la polarisation de la lumière en entrée. La borne optique fibrée (borne 39 de la figure 2) du coupleur 62 miroir est configurée en entrée optique (on parlera de ce fait de coupleur d'entrée pour désigner le coupleur 62 monté en miroir du coupleur à tester 61 dans le mode de réalisation de la Figure 6A). Cette borne d'entrée est adaptée pour recevoir un signal optique d'entrée par l'intermédiaire d'une fibre optique d'entrée. La borne optique fibrée du coupleur à tester 61 est configurée en sortie optique, adaptée pour délivrer un signal optique de sortie par l'intermédiaire d'une fibre optique de sortie. Les bornes optiques guidées des coupleurs 61 et 62 sont couplées deux-à-deux par l'intermédiaire de guides d'ondes planaires 64 et 65 réalisés sur silicium.

Selon des modes de réalisation de l'invention, on prévoit en outre un déphaseur réglable 63 (ou modulateur de phase) qui est intégré dans un premier chemin optique ou bras, entre les deux coupleurs 61 et 62 identiques montés dos-à-dos. Dans l'exemple montré, le déphaseur est agencé au niveau du bras de la structure 60 qui comprend le guide d'onde planaire 65 (bras de droite, sur la Figure 6A). Il s'agit d'une modulation de phase pure, c'est-à-dire sans modulation d'intensité (par exemple en utilisant un modulateur de phase dit "thermique" qui est connu pour cette propriété). La polarisation de la lumière en entrée du coupleur d'entrée 62 peut ainsi être commutée entre la polarisation purement *s* et la polarisation purement *p* à l'aide d'une tension V de réglage du déphasage qui est appliquée sur une entrée de réglage du déphasage du modulateur de phase 63, comme il a été présenté plus haut en référence à la Figure 5A et à la Figure 5B. En faisant varier la tension de réglage V, on peut amener le déphasage appliqué à la propagation du signal optique dans ce premier bras de la structure de test 60 à balayer la plage [0;π]. On force ainsi la polarisation du signal optique entrant dans le coupleur sous test 61 à balayer tous les états mixtes entre l'état de polarisation entièrement *s* et l'état de polarisation entièrement *p*, respectivement. La différence de transmission induite par la polarisation, et donc la PDL du 2DGC peut ainsi être simplement déterminée.

La Figure 6B montre une variante de la structure de test de la Figure 6A dans laquelle un modulateur de phase 66 est introduit dans l'autre bras de la structure, à savoir celui comprenant le guide d'onde planaire 64 (bras de gauche à la figure). Cet autre modulateur de phase 66 est structurellement identique au modulateur de phase 63 présent dans le premier bras de la structure de test 60, à savoir celui comprenant le guide d'onde 65. Toutefois, le modulateur de phase 66 est configuré de manière à n'introduire aucun déphasage pour la propagation du signal optique dans le guide d'onde 64. Tout se passe comme s'il était commandé en permanence de telle façon que le déphasage $\Delta\phi$ introduit soit nul ($\Delta\phi=0$). Dit autrement, il s'agit d'un modulateur de phase fictif ("dummy" en anglais), dont la présence permet toutefois d'équilibrer, entre les deux bras 64 et 65 de la structure de test 60, les caractéristiques de la propagation de la lumière dans lesdits bras. Ces caractéristiques comprennent l'éventuelle variation de polarisation induite, les éventuelles pertes induites, un éventuel déphasage statique, voire un éventuel décalage en longueur d'onde, qui seraient introduits par le modulateur de phase 63 selon la technologie retenue pour ce modulateur et selon, le cas échéant, les spécificités propres à chaque application.

Les deux variantes de la structure de test conformes à la Figure 6A et à la Figure 6B sont adaptées pour une utilisation de la structure de test avec des fibres optiques, en entrée et en sortie, qui sont en regard l'une de l'autre, c'est-à-dire et se faisant face mutuellement (suivant la direction verticale dans les vues schématiques de la Figure 6A et de la Figure 6B).

A la Figure 7A et Figure 7B montrent deux autres modes de réalisation d'une structure de test proposée par l'invention, qui sont des variantes des structures de test de la Figure 6A et de la Figure 6B, respectivement. Les dispositifs de test de la Figure 7A et de la Figure 7B sont adaptés pour une utilisation avec des fibres optiques respectives en entrée et en sortie qui sont agencées côte-à-côte (suivant la direction horizontale dans les vues schématiques de la Figure 7A et de la Figure 7B) en un bloc unitaire, aussi appelé unité de réseaux de fibres, ou encore réseau de fibres optiques ("fibre array" en anglais). Les réseaux de fibres sont des réseaux unidimensionnels ou bidimensionnels de fibres optiques. Souvent, un tel réseau n'est formé qu'à l'extrémité d'un faisceau de fibres, plutôt que sur toute la longueur des fibres en question. L'avantage d'un tel réseau de fibre est généralement de permettre d'introduire dans les fibres concernées la lumière d'un réseau de sources optiques adjacentes les unes aux autres, ou de permettre de coupler des fibres séparées à un autre composant via un réseau de guides d'ondes planaires adjacents les uns aux autres sur un circuit intégré photonique, comme c'est le cas ici.

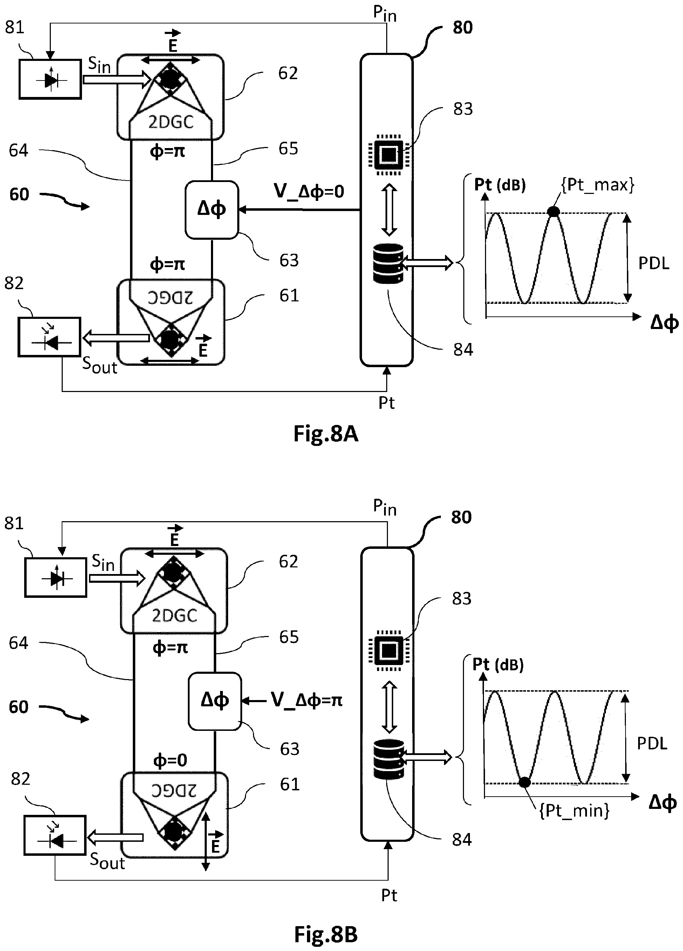

En référence aux schémas de la Figure 8A et de la Figure 8B, on va maintenant décrire un exemple de méthode de caractérisation de la PDL d'un 2DGC avec la structure de test proposée ci-dessus en référence aux schémas de la Figure 6A et de la Figure 6B, ou de leurs variantes de la Figure 7A et de la Figure 7B, respectivement. Pour la description de cet exemple, on considérera plus particulièrement la structure de test 60 de la Figure 6A, mais la personne de métier appréciera que la méthode de mesure de la PDL est la même pour les autres structures de test présentées en référence à la Figure 6B, à la Figure 7A ou à la Figure 7B.

Dans un cas d'usage, on fabrique une certaine quantité de coupleurs à tester sur un même wafer, par exemple une série d'une centaine de coupleurs, chacun dans un dispositif de test conforme à l'invention, mais avec des petites variations de design et/ou de paramètres technologiques de fabrication entre chacun de ces coupleurs. Les tests permettent d'apprécier quelle(s) version(s) des coupleurs de la série donne la plus petite PDL. De telles opérations sont de pratique courante, en soi, dans l'industrie du semiconducteur afin de concevoir des composants photoniques performants.

Un équipement de test comprend un contrôleur de test 80, au moins une source 81 de lumière polarisée, et un capteur de lumière ou photodétecteur 82 pour chacune des structures de test comme la structure 60 montrée à la Figure 8A et à la Figure 8B qui peuvent être testées simultanément lors du même test. Le contrôleur de test 80 comprend un calculateur 83, comme un microprocesseur, et une mémoire 84 comprenant de la mémoire vive (ou RAM, de l'anglais "Random Access Memory").

L'équipement de test (ou "probing station" en anglais), sert à tester des puces non packagées sur lesquelles on mesure la puissance transmise avec des sondes de lecture optique respectivement associées à chaque structure de test. Par exemple, le contrôleur de test 80 peut être couplé à une photodiode 82 en sortie de la structure de test 60 montrée à la Figure 8A et à la Figure 8B. Cette photodiode 82 peut être intégrée dans la structure de test elle-même, c'est-à-dire qu'elle peut être réalisée sur le même substrat de silicium, pour mesurer la puissance optique Pt en sortie du coupleur sous test 61, qui est la puissance transmise par la structure de test 60 à partir de la puissance lumineuse $P_{in}$ injectée en entrée au niveau du coupleur d'entrée 62. En variante, on peut sortir la lumière de la structure de test 60 par une fibre optique de sortie couplée au réseau de couplage du coupleur sous test 61, afin de mesurer la puissance lumineuse avec une photodiode externe déportée. Dans les deux cas, la photodiode convertit le signal optique qu'elle reçoit du coupleur 61 en un signal électrique représentatif de l'intensité lumineuse transmise à travers la structure de test 60. C'est ce signal électrique qui constitue donc la mesure de la puissance lumineuse transmise Pt.

Dans le contrôleur de test 80, il y a un logiciel qui, lorsqu'il est chargé dans la mémoire 84 et exécuté par le processeur 83, enregistre les données correspondant aux graphes des courbes montrées à droite de la Figure 8A et de la Figure 8B, et qui est configuré pour extraire la PDL desdites données enregistrées. La PDL est donnée par la différence entre la valeur *T max* et la valeur *T_min* de la transmission optique *T* de la structure de test 60. Celle-ci est déterminée sur la base de la puissance $P_{in}$ du signal optique d'entrée Vin, et sur la base de la puissance transmise Pt transmise par la structure sous test 60 qui est mesurée durant le balayage de la plage de valeurs $[0;\pi]$ du déphasage $\Delta\phi$.

La source 81 de lumière polarisée peut être réalisée directement sur le substrat de silicium (wafer) sur lequel les structures de test sont réalisées, ou bien être une source externe au wafer des structures de test auquel elle est optiquement couplée par au moins une fibre, généralement par un réseau de fibres ("Fibre Array"). Par exemple, la source 81 peut comprendre au moins un laser à semi-conducteurs, comme une diode laser émettant à au moins une longueur d'onde dans le spectre d'intérêt. Dans des modes de mise en oeuvre, la diode laser peut être réglable (on dit aussi "accordable"), c'est-à-dire que la longueur de la cavité optique du laser peut être modifiée de manière contrôlée, ce qui permet de les accorder en continu sur une plage de longueurs d'ondes relativement importante. Par exemple, il peut s'agir d'un laser à semi-conducteurs à rétroaction distribuée (DFB, de l'anglais "Distributed Feedback"), ou d'un laser à cavité verticale émettant par la surface (ou VCSEL, de l'anglais "Vertical Cavity Surface Emitting Laser") qui utilisent des structures de réflecteurs de Bragg distribués (DBR, mis pour "Distributed Bragg reflector" en anglais) périodiques pour former les miroirs de la cavité optique. On peut également modifier la température du laser, sachant que le changement d'indice optique de la structure DBR lié à la température entraîne un déplacement de sa longueur d'onde de réflexion maximale et donc de la longueur d'onde du laser. La plage d'accord de ces lasers est généralement de quelques nanomètres (nm), jusqu'à un maximum d'environ 6 nm, lorsque la température du laser est modifiée sur environ 50 degrés Kelvin (K). En règle générale, la longueur d'onde est accordée de 0,08 nm/K pour les lasers DFB fonctionnant dans le régime de longueur d'onde de 1550 nm. Ces lasers sont couramment utilisés dans les applications de communications optiques telles que les systèmes DWDM (de l'anglais "Dense Wavelength Division Multiplexing") pour permettre le réglage de la longueur d'onde du signal, en sorte que la personne du métier sait les mettre en oeuvre sans qu'il soit nécessaire de fournir ici plus d'indications. Pour obtenir un réglage à plus large bande encore, à l'aide de cette technique, on peut prévoir un réseau de lasers de ce type sur une seule puce et concaténer les plages de réglage de la longueur d'onde du laser.

La lumière polarisée monochromatique, produite à une longueur d'ondes $\lambda_{in}$ déterminée par la source 81 de lumière polarisée peut être introduite dans chacune des structures de test qui sont testées simultanément, par exemple par un faisceau de fibres optiques respectives, ou par un réseau de fibres ("Fibre Array"). On s'assure ainsi que chaque structure de test est excitée par une lumière ayant les mêmes caractéristiques (longueur(s) d'ondes incidente $\lambda_{in}$, puissance lumineuse d'entrée $P_{in}$, polarisation *s* ou *p,* phase $\phi_{in}$) que les autres structures de test. Ceci n'est pas une condition propre à la mesure de la PDL selon des modes de mise en oeuvre selon l'invention, mais permet d'avoir des résultats comparables de mesures de la PDL pour une pluralité de coupleurs optiques qui sont réalisées à l'aide d'une pluralité de structures de test respectives. Par exemple, la longueur d'onde incidente $\lambda_{in}$ peut être comprise dans les bandes dites "C" et "L" de 1450 nm à 1650 nm, par exemple entre 1510 nm et 1590 nm, ou dans la bande dite bande "O" entre 1270 nm et 1360 nm, selon les applications envisagées pour le modèle de coupleur optique sous test 61. Toutefois ce qui est décrit dans ce cas particulier fonctionne aussi pour d'autres longueurs d'onde.

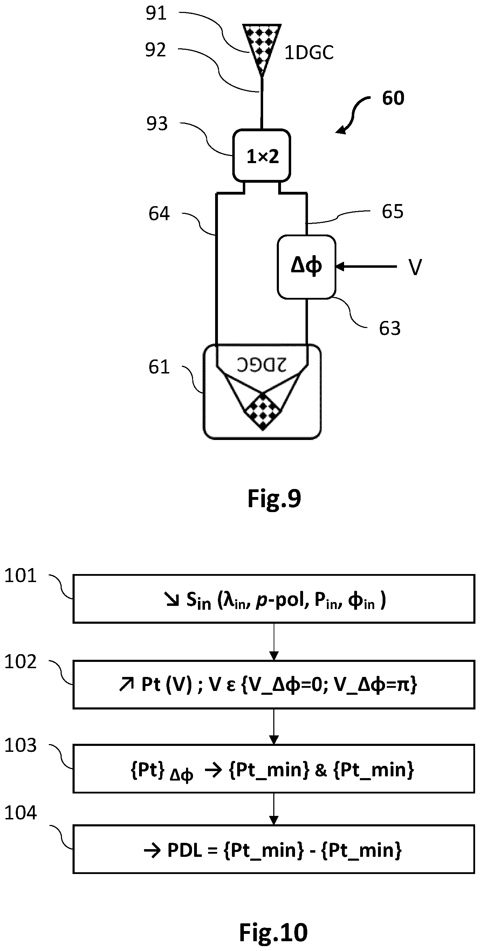

Un exemple de procédé de caractérisation de la PDL d'un coupleur de type 2DGC sous test 61 va maintenant être exposé. Cet exposé est donné en référence encore à la Figure 8A et à la Figure 8B, et en référence en outre au diagramme d'étapes de la Figure 10.

Afin d'exciter le réseau de couplage du coupleur d'entrée 62 de la structure de test 60 de la Figure 8A et de la Figure 8B, un signal optique incident $S_{in}$ à la longueur d'onde $\lambda_{in}$, polarisé *p*, et ayant une intensité (puissance optique) $P_{in}$, est produite par la source 81 et inséré à l'étape 101, dans la borne optique fibrée du coupleur d'entrée 62, par exemple par l'intermédiaire d'une fibre optique d'entrée à maintien de polarisation. La polarisation de la lumière incidente peut-être soit entièrement *p* comme dans l'exemple représenté, soit entièrement s. Pour ces deux états de polarisation incidente, en effet, les deux composantes du signal optique incident $S_{in}$ se propagent avec la même intensité dans chacun des guides d'ondes planaires sur silicium 65 et 64 couplés aux bornes optiques guidées du 2DGC d'entrée 62. Cette intensité sera égale à la moitié de $P_{in}$. Dit autrement, le signal optique d'entrée $S_{in}$ est divisé en deux composantes d'intensités respectives égales entre elles, qui sont insérées chacun dans l'un des deux bras de la structure de test 60 qui comprennent le guide d'ondes planaire 65 et le guide d'ondes planaire 64, respectivement. On répète ici que, dans l'exemple représenté, la polarisation de la lumière incidente $S_{in}$ est entièrement $p$ (comme illustré par la Figure 5A déjà décrite dans ce qui précède). Mais il n'y a aucune différence dans le processus mise en oeuvre par ailleurs, si la polarisation de la lumière incidente est entièrement s (comme illustré par la Figure 5B également déjà décrite).

Ensuite, à l'étape 102, la transmission optique du 2DGC sous test 61 c'est-à-dire la puissance transmise Pt qui est mesurée en sortie dudit coupleur 61 par le photodétecteur 82, qui est par exemple une photodiode. Plus exactement, une série de mesures sont réalisées alors que le déphasage $\Delta\phi$ introduit dans le bras de la structure qui comprend le guide d'ondes planaire 65 par le modulateur de phase 63 est amené à varier entre 0 et $\pi$, en faisant varier la tension V de réglage du modulateur de phase entre ses valeurs extrêmes V=V\_$\Delta\phi$=0 d'une part, et V=V\_$\Delta\phi$=$\pi$, d'autre part. Ce balayage, sur la plage de valeurs [0;$\pi$] du déphasage $\Delta\phi$ qui est alors introduit dans le bras 65 de la structure de test par le modulateur de phase 63, est piloté par le processeur 83 du contrôleur de test 80 par l'exécution d'un logiciel pilote ad-hoc. Le déphasage $\Delta\phi$ entre les deux branches 64 et 65 fait varier l'état de polarisation en sortie, c'est-à-dire au niveau du coupleur de sortie 61 de la structure de test 60, qui est le dispositif sous test (DUT), pour une polarisation en entrée de la structure de test 60 qui ne varie pas. Les valeurs {Pt} de la puissance Pt transmise par la structure de test ainsi mesurées, sont stockées de manière indexée (en fonction de la valeur courante du déphasage $\Delta\phi$), sous la forme par exemple d'une table de valeurs (ou LUT, de l'anglais "Lookup Table"), dans la mémoire 84 du contrôleur de test 80. Cette table de valeurs est indexée par les valeurs associées du déphasages $\Delta\phi$.

Une fois que des mesures {Pt} de la puissance transmise Pt ont été acquises pour l'intégralité de la plage de valeurs [0;$\pi$] du déphasage $\Delta\phi$, c'est-à-dire une fois que les valeurs de la tension de réglage V du modulateur de phase 63 ont balayé l'intervalle [V\_$\Delta\phi$=0;V\_$\Delta\phi$=$\pi$], le calculateur 83 détermine à l'étape 103 l'amplitude de la variation de cette puissance transmise Pt, à partir des valeurs {Pt} stockées dans la mémoire 84. La valeur maximale {Pt_max} est donnée par la configuration représentée à la Figure 8A dans laquelle la phase $\phi$ en entrée du coupleur 61 sous test est égale à $\pi$ (comme figuré par le point sur la courbe à droite de ladite figure). La valeur minimale {Pt_min} est donnée par la configuration représentée à la Figure 8B dans laquelle la phase $\phi$ en entrée du coupleur sous test 61 est égale à 0 (comme figuré par le point sur la courbe à droite de ladite figure). La personne du métier appréciera qu'entre l'état initial illustré par la Figure 8A et correspondant à une polarisation en sortie identique à la polarisation totalement $p$ en entrée (avec une phase $\phi$=$\pi$ en entrée du coupleur 61), d'une part, et l'état final illustré par la Figure 8B et correspondant à une polarisation en sortie qui est une polarisation totalement $s$ (avec une phase $\phi$=0 en entrée du coupleur 61 pour une phase invariée $\phi$=$\pi$ en entrée du dispositif de test 60), il y a des états mixtes de polarisation $p$ et s correspondant à chaque valeur du déphasage $\Delta\phi$ entre 0 et $\pi$ qui est introduit par le modulateur de phase 63 sous la commande du contrôleur 80 par l'intermédiaire de la tension V de réglage du déphaseur variable 63.

Le traitement de données exécuté par le calculateur 83 sur les valeurs {Pt} acquises et stockées dans la mémoire 84 du contrôleur 80, qui sont représentatives de la puissance transmise Pt en fonction du déphasage $\Delta\phi$, comprend l'identification de la valeur maximum {Pt_max} et l'identification de la valeur minimum {Pt_min} de la puissance optique transmise Pt. Dans l'exemple illustré par la Figure 8A et la Figure 8B, la valeur maximum {Pt_max} est obtenue pour un déphasage entre les deux bras de la structure de test 60 qui égal à zéro ($\Delta\phi$=0), ce qui correspond à la configuration de la Figure 8A. Graphiquement, la valeur {Pt_max} correspond à un pic de la courbe représentée sur la droite de la figure 8A, qui donne l'allure de la de réponse en déphasage de la structure de test 60, c'est-à-dire la puissance transmise Pt en fonction du déphasage $\Delta\phi$ introduit par le modulateur de phase 63. Par ailleurs, la valeur {Pt_min} correspond graphiquement à un creux de la courbe représentée sur la droite de la figure 8B, qui donne l'allure de la puissance transmise Pt en fonction du déphasage $\Delta\phi$ introduit par le modulateur de phase 63.

$$T = \frac{P_t}{P_{in}}$$

Le coefficient de transmission de la structure de test 60 donné par . L'amplitude $T_{max}$-$T_{min}$ de la variation de la transmission $T$ est donnée par la différence entre les deux valeurs extrêmes {Pt_max} et {Pt_min}, à une valeur $P_{in}$ maintenue constante tout au long du processus de test. Cette amplitude donne, à l'étape 104, la valeur de la PDL du coupleur 61 de type 2DGC sous test, en application de l'équation (2) donnée plus haut. Dit autrement, les pertes PDL du coupleur 61 liées à la polarisation sont obtenues par calcul sur la base de la valeur maximum {Pt_max} et de la valeur minimum {Pt_min} de la puissance optique Pt mesurée en sortie de la structure de test 60.

Avantageusement, on note qu'il n'est pas utile de connaître la relation entre la tension de réglage V du déphaseur variable 63 et la valeur de déphasage $\Delta\phi$ qu'il génère, puisqu'on ne s'intéresse qu'à la différence d'intensité lumineuse entre un pic et un creux seulement, pour en faire la différence. Dit autrement, la détermination de la PDL est effectuée en mode différentiel, ou mode relatif, par de simples recherches d'un maximum et d'un minimum dans une table de valeurs indexées, ce qui est un processus exécutable rapidement par le processeur 83 du contrôleur de test 80.

La personne du métier appréciera qu'à partir des mesures {Pt} de la puissance transmise dans la structure de test qui sont enregistrées dans la mémoire 84, on peut aussi obtenir la valeur des pertes d'insertion IL du coupleur sous test 61. Ceci est classique en soi. Les pertes d'insertion du réseau de couplage 61 sous test peuvent en effet être obtenues en divisant par deux la puissance transmise Pt alors que le modulateur de phase est non actionné, c'est-à-dire avec V=V\_$\Delta\phi$=0, en sorte que le déphasage $\Delta\phi$ entre les deux branches de la structure de test 60 est nul. Dans cette configuration, les polarisations entrantes et sortantes sont les mêmes (polarisation entièrement *s*, dans l'exemple représenté à la Figure 8A correspondante). En pratique, ceci est vrai si la longueur des guides entre entrées et sorties est moins de quelques millimètres (mm). Sinon, les petites variations aléatoires de fabrication font que la phase relative au bout des deux guides peut ne pas être rigoureusement égale à zéro.

Comme on l'aura compris, le processus de test décrit ci-dessus pour une onde lumineuse d'entrée monochromatique déterminée peut être répété pour d'autres valeurs de la longueur d'ondes $\lambda_{in}$ à l'intérieur d'une bande de longueurs d'ondes d'intérêt, afin de caractériser en longueurs d'onde les pertes PDL et IL du coupleur 61 sous test pour ladite bande.

En principe, les valeurs {Pt_max} et {Pt_min} obtenues pour chaque longueur d'ondes ne varient pas d'un intervalle [0;π] à l'autre, en sorte qu'il n'y a pas besoin, par exemple, de moyenner la calcul de la PDL sur plusieurs écarts creux-pic successifs de la courbe de réponse en déphasage de la structure de test 60. Les valeurs {Pt_max} et/ou {Pt_min} pourraient varier s'il y avait des pertes variables sur les chemins optiques dans la structure de test 60, ce qui n'est pas le cas avec la structure de test proposée.

Afin en outre d'éviter un écart de phase dynamique incontrôlé entre les deux bras respectifs de la structure de test 60 qui pourrait être introduit par le modulateur de phase en fonction de la variation de sa tension de commande V, certains modes de réalisation de la structure de test peuvent prévoir l'utilisation d'un déphaseur optique à effet thermo-optique. Avec un tel déphaseur optique, la variation de la phase $\Delta\phi$ est obtenue par une variation de l'indice de réfraction du matériau formant le coeur du guide d'onde 65 considéré, par l'intermédiaire d'une modification de la température appliquée audit guide d'ondes 65. Avantageusement, un tel déphaseur à effet thermo-optique ne modifie pas l'intensité du signal optique circulant dans ledit guide d'ondes 65. Un mode de réalisation possible d'un déphaseur optique à effet thermo-optique est décrit, par exemple, dans l'article scientifique par Harris N. C. et al., "Efficient, Compact and Low Loss Thermo-Optic Phase Shifier in Silicon", Optics Express 22 9 (2014), doi: 10487-93. Par ailleurs, une comparaison entre différents exemples de déphaseurs optiques à effet thermo-optique a fait l'objet de l'article scientifique par A. Masood et al., "Comparison of heater architectures for thermal control of silicon photonic circuits", 10th International Conférence on Group IV Photonics, Seoul, Korea (South), 2013, pp. 83-84, doi: 10.1109/Group4.2013.6644437.

Par exemple, dans un mode de réalisation particulier, le déphaseur 63 peut comporter :

- un guide d'onde traversé par le signal optique à déphaser, qui est constitué par le guide d'onde planaire 65 du premier bras de la structure de test considérée ici ; et,
- un métal résistif disposé à proximité de ce guide d'onde planaire 65.

En réponse à la tension V de commande de déphasage délivrée par le contrôleur de test 80, une différence de potentiels est appliquée sur ce métal résistif, ce qui génère de la chaleur. Le métal résistif fait donc varier la température du guide d'onde 65 et donc son indice de réfraction. Ceci modifie la phase du signal optique qui traverse ce guide d'onde.

Pour accéder directement à la PDL du 2DGC en utilisant la méthode de test décrite ci-dessus en référence à la Figure 8A et à la Figure 8B, il convient que l'intensité lumineuse du signal optique circulant dans chacun des deux bras de la structure de test (*i.e.*, dans chacun des deux guides d'ondes 64 et 65) soit la même. Cette condition est satisfaite si la polarisation incidente est strictement symétrique, ce qui est le cas lorsque le signal optique incident est entièrement polarisé *s* ou entièrement polarisé *p*, comme il est prévu dans les modes de mise en oeuvre du procédé qui ont été décrits ci-dessus. Si cela ne peut pas être assuré, en revanche, une variante de la structure de test comme celle illustrée dans la Figure 9 peut être utilisée.

La Figure 9 montre en effet une variante de la structure de test comprenant, à la place du coupleur 62 en miroir du coupleur 61 sous test, un autre type de coupleur fibre/silicium 91, un guide d'onde 92 sur silicium, et un diviseur de puissance optique 93. Le coupleur fibre/silicium 91 est un coupleur du type "1 vers 1" (c'est-à-dire à une entrée fibrée et à une sortie guidée sur silicium), par exemple, un coupleur optique à réseau de couplage à une dimension (1DGC) comme représenté, ou un coupleur par la tranche. Il est adapté et agencé pour coupler la lumière incidente d'une source à laquelle il est relié par une fibre optique d'entrée (non représentée), dans le guide d'onde 92. Le diviseur de puissance optique 93 est un diviseur à une entrée et deux sorties, et avec partage de puissance optique d'entrée à 50/50 entre lesdites sorties. Ainsi, l'intensité lumineuse dans le guide d'ondes 92 est divisée de façon égale, entre ses deux sorties, par le diviseur de puissance optique 93. Ce dernier peut être une jonction en forme de "Y", un coupleur d'interférence multimode (MMI de l'anglais "Multi Mode Interférence"), ou un coupleur directionnel. Une première sortie du diviseur de puissance optique 93 est couplée au guide d'ondes 64 qui forme le premier bras de la structure de test, tandis que la seconde sortie dudit diviseur 93 est couplée au guide d'ondes 65 qui forme le second bras de ladite structure de test. Avec cette variante, la PDL du 2DGC peut être déterminée sans avoir besoin d'une polarisation connue bien définie en entrée.

La présente invention a été décrite et illustrée dans la présente description détaillée et dans les figures des dessins annexés, dans des formes de réalisation possibles. La présente invention ne se limite pas, toutefois, aux formes de réalisation présentées. D'autres variantes et modes de réalisation peuvent être déduits et mis en oeuvre par la personne du métier à la lecture de la présente description et des dessins annexés.

**EP 4 579 297 A1**

Dans les revendications, le terme "comprendre" ou "comporter" n'exclut pas d'autres éléments ou d'autres étapes. Les différentes caractéristiques présentées et/ou revendiquées peuvent être avantageusement combinées. Leur présence dans la description ou dans des revendications dépendantes différentes, n'excluent pas cette possibilité. Les signes de référence ne sauraient être compris comme limitant la portée de l'invention.

**Liste des documents cités**

**Documents brevets**

US20120207428A1

**Littérature non-brevet**

F. Van Laere et al., "Efficient Polarization Diversity Grating Couplers in Bonded InP-Membrane" IEEE Photonics Technol. Lett., vol. 20, no. 4, pp. 318-320, Feb. 2008, DOI: 10.1109/LPT.2007.915587

Mekis et al., "A Grating-Coupler-Enabled CMOS Photonics Platform ", IEEE J. Sel. Top. Quantum Electron., vol. 17, no. 3, pp. 597-608, May 2011, DOI: 10.1109/JSTQE.2010.2086049

S. Plantier et al., "Impact of scattering element shape on polarisation dépendent loss in two dimensional grating couplers", IEEE 13th International Conférence on Group IV Photonics (GFP), August 2016, DOI: 10.1109/GROUP4.2016.7739057

Harris, N. C., et al., "Efficient, Compact and Low Loss Thermo-Optic Phase Shifter in Silicon", Optics Express 22 9 (2014), DOI: 10487-93

A. Masood et al., "Comparison of heater architectures for thermal control of silicon photonic circuits", 10th International Conférence on Group IV Photonics, Seoul, Korea (South), 2013, pp. 83-84, DOI: 10.1109/Group4.2013.6644437

Robert HALIR et al. "Reducing Polarization-Dependent Loss of Silicon-on-Insulator Fiber to Chip Grating Couplers", IEEE PHOTONICS TECHNOLOGY LETTERS, IEEE, USA, vol. 22, no. 6, 15 mars 2010 (2010-03-15), pages 389-391, ISSN: 1041-1135, DOI: 10.1109/LPT.2009.2039869

Zanyun ZHANG et al. "High-Efficiency Two-Dimensional Perfectly Vertical Grating Coupler With Ultra-Low Polarization Dependent Loss and Large Fibre Misalignment Tolerance", IEEE JOURNAL OF QUANTUM ELECTRONICS, IEEE, USA, vol. 57, no. 5, 7 juillet 2021 (2021-07-07), pages 1-7, ISSN: 0018-9197, DOI: 10.1109/JQE.2021.3095289

Zanyun ZHANG et al., intitulé "Two-Dimensional Apodized Grating Coupler for Polarization-Independent and Surface-Normal Optical Coupling", JOURNAL OF LIGHTWAVE TECHNOLOGY, IEEE, USA, vol. 38, no. 15, 8 avril 2020 (2020-04-08), pages 4037-4044, ISSN: 0733-8724, DOI: 10.1109/JLT.2020.2986043

**Revendications**

1. Structure de test intégrée sur silicium pour la caractérisation de la perte dépendante de la polarisation, PDL, d'un coupleur optique fibre/silicium de type "1 vers 2" à réseau de diffraction bidimensionnel, 2DGC, ayant une borne optique fibrée ainsi qu'une première borne optique guidée et une seconde borne optique guidée, ladite structure de test comprenant :

   • un premier guide d'onde planaire (65) ayant deux extrémités ;
   • un second guide d'onde planaire (64) ayant deux extrémités ;
   • un coupleur optique fibre/silicium d'entrée (62,91) ayant une borne optique fibrée, adapté pour recevoir un signal optique d'entrée ($S_{in}$) via ladite borne optique fibrée, et des moyens de division optique associés (93) qui sont adaptés pour diviser ledit signal optique d'entrée ($S_{in}$) en deux composantes d'intensités optiques respectives égales, et qui sont agencés pour insérer chacune desdites composantes dans le premier guide d'onde planaire (65) et dans le second guide d'onde planaire (64), respectivement, à une première extrémité respective desdits guides d'onde planaires (64,65) ; et,
   • le 2DGC sous test (61), agencé en tant que coupleur optique fibre/silicium de sortie avec ses deux bornes optiques guidées qui sont couplées à une seconde extrémité du premier guide d'onde planaire (65) et du second guide d'onde planaire (64), respectivement, et configuré pour délivrer un signal optique de sortie ($V_{out}$) sur sa borne optique fibrée,

**caractérisée en ce qu'**elle comprend, en outre :

> • au moins un premier déphaseur réglable (63) qui est agencé au niveau du premier guide d'onde planaire (65) entre le coupleur optique d'entrée (62,91) et le 2DGC sous test (61), et qui est configuré pour être piloté en sorte d'appliquer un décalage de phase déterminé entre 0 et $\pi$, en fonction d'un signal de réglage de déphasage (V), au signal optique se propageant dans ledit premier guide d'onde planaire (65), ledit décalage de phase étant un décalage de phase pur, c'est-à-dire sans variation d'intensité optique.

**2.** Structure de test selon la revendication 1, dans laquelle le coupleur optique d'entrée (62,91) et ses moyens de division optique associés (93) comprennent un coupleur optique fibre/silicium de type " 1 vers 1" suivi d'un diviseur de puissance optique (93) à une entrée et à deux sorties et avec division de puissance optique égale entre lesdites sorties, lesdites sorties étant couplées chacune à une des premières extrémités du premier guide d'ondes planaire (65) et du second guide d'ondes planaire (64), respectivement.

**3.** Structure de test selon la revendication 2, dans laquelle le coupleur optique fibre/silicium de type " 1 vers 1" est un coupleur à réseau de diffraction à une dimension, 1DGC.

**4.** Structure de test selon la revendication 1, dans laquelle le coupleur optique d'entrée (62,91) et ses moyens de division optique (93) associés comprennent un second 2DGC (62), identique au 2DGC sous test (61), et ayant ses bornes optiques guidées qui sont couplées chacune à l'autre des extrémités du premier guide d'ondes planaire (65) et du second guide d'ondes planaire (64), respectivement.

**5.** Structure de test selon l'une quelconque des revendications 1 à 4, comprenant en outre un second déphaseur réglable (66), structurellement identique au premier déphaseur réglable (63), qui est agencé au niveau du second guide d'onde planaire (64) entre le coupleur optique d'entrée (62,91) et le 2DGC sous test (61), et qui est configuré de telle sorte qu'en permanence il n'applique aucun décalage de phase au signal optique se propageant dans ledit second guide d'onde (64).

**6.** Dispositif de test selon l'une quelconque des revendications 1 à 5, dans lequel le coupleur optique sous test (61) et le coupleur optique d'entrée (62) sont agencés en symétrie l'un par rapport à l'autre, de telle manière qu'une fibre optique d'entrée puisse être raccordée à la borne optique fibrée du coupleur optique d'entrée (62) et qu'une fibre optique de sortie puisse être raccordée à la borne optique fibrée du coupleur optique sous test (61), avec ladite fibre optique d'entrée et ladite fibre optique de sortie s'étendant en regard l'une de l'autre.

**7.** Dispositif de test selon l'une quelconque des revendications 1 à 5, dans lequel le coupleur optique sous test (61) et le coupleur optique d'entrée (62) sont agencés en un bloc de telle manière qu'une fibre optique d'entrée puisse être raccordée à la borne optique fibrée du coupleur optique d'entrée (62) et qu'une fibre optique de sortie puisse être raccordée à la borne optique fibrée du coupleur optique sous test (61), ladite fibre optique d'entrée et ladite fibre optique de sortie étant des fibres optiques d'un même réseau de fibres.

**8.** Dispositif de test selon l'une quelconque des revendications 1 à 7, dans lequel le premier modulateur de phase est un déphaseur à effet thermo-optique.

**9.** Equipement de test pour la caractérisation de la perte dépendante de la polarisation, PDL, d'un coupleur optique fibre/silicium de type "1 vers 2" à réseau de diffraction bidimensionnel, 2DGC, comprenant :

> • une structure de test intégrée sur silicium (60) selon l'une quelconque des revendications 1 à 8, avec le coupleur 2DGC sous test agencé en tant que coupleur optique fibre/silicium de sortie de ladite structure de test intégrée ;
> • un contrôleur de test (80),
> • une source (81) de lumière polarisée, et
> • un capteur de lumière (82) agencé pour mesurer la puissance optique (Pt) en sortie du coupleur sous test (61), qui est la puissance optique transmise par la structure de test (60) à partir de la puissance lumineuse (Pin) injectée en entrée au niveau du coupleur d'entrée (62) de ladite structure de test

dans lequel le contrôleur de test (80) comprend un calculateur (83) et une mémoire (84) comprenant de la mémoire vive, et est configuré pour :

> • causer l'insertion (101) d'un signal optique d'entrée (Vin) dans la borne optique fibrée du coupleur optique d'entrée de la structure de test ;

• piloter le déphaseur réglable (63) de la structure de test (60) en faisant faire varier un signal de réglage de déphasage (V) dudit déphaseur de manière que le décalage de phase appliqué au signal optique se propageant dans le premier guide d'onde planaire (65) de ladite structure de test (60) balaie l'intervalle $[0;\pi]$ ; et dans le même temps,

• causer la mesure par le capteur de lumière (82) et l'enregistrement (102) dans la mémoire (84), de valeurs de la transmission (Pt) à travers la structure de test (60) en fonction de la valeur ($\Delta\phi$) du décalage de phase

• déterminer (103) la valeur maximale (Pt_max) et de la valeur minimale (Pt_min) des valeurs de la transmission (Pt) mesurées et enregistrées ; et,

• obtenir (104) la PDL comme étant la différence entre ladite valeur maximale (Pt_max) et ladite valeur minimale (Pt_min).

10. Equipement de test selon la revendication 9, dans lequel la source de lumière polarisée (81) et/ou le capteur de lumière (82) sont réalisés sur le même substrat de silicium, ou wafer, sur lequel la structure de test est réalisée.

11. Procédé de caractérisation de la perte dépendante de la polarisation, PDL, d'un coupleur optique fibre/silicium de type "1 vers 2" à réseau de diffraction bidimensionnel, 2DGC, à l'aide d'une structure de test intégrée sur silicium (60) selon l'une quelconque des revendications 1 à 8, ledit procédé comprenant les étapes suivantes :

• insertion (101) d'un signal optique d'entrée ($V_{in}$) dans la borne optique fibrée du coupleur optique d'entrée ;

• mesure et enregistrement (102) de valeurs de la transmission (Pt) à travers la structure de test (60) en fonction de la valeur ($\Delta\phi$) du décalage de phase appliqué au signal optique se propageant dans le premier guide d'onde planaire (65) par le déphaseur réglable (63), alors que le signal de réglage de déphasage (V) dudit déphaseur est varié de manière que ledit décalage de phase balaie l'intervalle $[0;\pi]$ ;

• détermination (103) de la valeur maximale (Pt_max) et de la valeur minimale (Pt_min) des valeurs de la transmission (Pt) mesurée et enregistrées ; et,

• obtention (104) de la PDL comme étant la différence entre ladite valeur maximale (Pt_max) et ladite valeur minimale (Pt_min).

12. Produit programme d'ordinateur comprenant une ou plusieurs séquences d'instructions stockées sur un support de mémoire (84) lisible par une machine (80) comprenant un processeur (83), lesdites séquences d'instructions étant adaptées pour réaliser toutes les étapes du procédé selon la revendication 11 lorsque le programme est lu dans le support de mémoire (84) et exécuté par le processeur (83).

**Fig.1**

**Fig.2**

**Fig.3**

**Fig.4**

**Fig.5A**

**Fig.5B**

**Fig.6A**

**Fig.6B**

**Fig.7A**

**Fig.7B**

**Fig.8A**

**Fig.8B**

91

92

1DGC

93

60

1×2

64

65

Δφ ← V

63

61

2DGC

**Fig.9**

101    ↘ $S_{in}$ ($\lambda_{in}$, *p*-pol, $P_{in}$, $\phi_{in}$ )

102    ↗ Pt (V) ; V ε {V_Δφ=0; V_Δφ=π}

103    {Pt} $_{\Delta\phi}$ → {Pt_min} & {Pt_min}

104    → PDL = {Pt_min} - {Pt_min}

**Fig.10**

| | Europäisches Patentamt<br>European Patent Office<br>Office européen des brevets | **RAPPORT DE RECHERCHE EUROPEENNE** | Numéro de la demande<br>EP 24 22 3292 |
|---|---|---|---|

### DOCUMENTS CONSIDERES COMME PERTINENTS

| Catégorie | Citation du document avec indication, en cas de besoin,<br>des parties pertinentes | Revendication concernée | CLASSEMENT DE LA DEMANDE (IPC) |
|---|---|---|---|
| X,D | US 2012/207428 A1 (ROELKENS GUENTHER [BE] ET AL) 16 août 2012 (2012-08-16)<br>* figures 5-7 *<br>* alinéas [0001] - [0014], [0062] - [0073] * | 1-12 | INV.<br>G02B6/124<br>G02B6/30<br>G02B6/34 |
| | ----- | | ADD.<br>G02B6/27 |
| X,D | HALIR R ET AL: "Reducing Polarization-Dependent Loss of Silicon-on-Insulator Fiber to Chip Grating Couplers",<br>IEEE PHOTONICS TECHNOLOGY LETTERS, IEEE, USA,<br>vol. 22, no. 6, 15 mars 2010 (2010-03-15), pages 389-391, XP011290011,<br>ISSN: 1041-1135, DOI: 10.1109/LPT.2009.2039869<br>* figure 1 *<br>* section "III. DEVICE AND MEASUREMENT SETUP *<br>* section "IV. RESULTS" * | 1-12 | G02B6/12 |
| | ----- | | **DOMAINES TECHNIQUES RECHERCHES (IPC)** |
| X,D | ZHANG ZANYUN ET AL: "High-Efficiency Two-Dimensional Perfectly Vertical Grating Coupler With Ultra-Low Polarization Dependent Loss and Large Fibre Misalignment Tolerance",<br>IEEE JOURNAL OF QUANTUM ELECTRONICS, IEEE, USA,<br>vol. 57, no. 5,<br>7 juillet 2021 (2021-07-07), pages 1-7, XP011868573,<br>ISSN: 0018-9197, DOI: 10.1109/JQE.2021.3095289<br>[extrait le 2021-08-02]<br>* figures 1, 4, 7 *<br>* section "II. DESIGN AND PRINCIPLE" *<br>* section "III. FABRICATION AND MEASUREMENT" * | 1-12 | G02B |
| | ----- | | |
| | -/-- | | |

| Le présent rapport a été établi pour toutes les revendications | | |
|---|---|---|
| Lieu de la recherche<br>La Haye | Date d'achèvement de la recherche<br>10 avril 2025 | Examinateur<br>Zakynthinos, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 1 de 4

Europäisches
Patentamt

European
Patent Office

Office européen
des brevets

**RAPPORT DE RECHERCHE EUROPEENNE**

Numéro de la demande

EP 24 22 3292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | ZHANG ZANYUN ET AL: "Two-Dimensional Apodized Grating Coupler for Polarization-Independent and Surface-Normal Optical Coupling", JOURNAL OF LIGHTWAVE TECHNOLOGY, IEEE, USA, vol. 38, no. 15, 8 avril 2020 (2020-04-08), pages 4037-4044, XP011800059, ISSN: 0733-8724, DOI: 10.1109/JLT.2020.2986043 [extrait le 2020-07-21] * figure 7 * * section "III. FABRICATION AND MEASUREMENT" * ----- | 1-12 | |
| A,D | MASOOD ADIL ET AL: "Comparison of heater architectures for thermal control of silicon photonic circuits", 10TH INTERNATIONAL CONFERENCE ON GROUP IV PHOTONICS, IEEE, 28 août 2013 (2013-08-28), pages 83-84, XP032513436, ISSN: 1949-2081, DOI: 10.1109/GROUP4.2013.6644437 [extrait le 2013-10-22] * figure 2 * ----- | 2,3 | DOMAINES TECHNIQUES RECHERCHES (IPC) |
| A | CN 112 946 930 A (SUZHOU WEIGUANG ELECTRONIC FUSION TECH RESEARCH INSTITUTE CO LTD) 11 juin 2021 (2021-06-11) ----- | 1-12 | |
| A | CN 112 034 638 A (SUZHOU YILAN MICRO PHOTOELECTRIC TECH CO LTD) 4 décembre 2020 (2020-12-04) ----- | 1-12 | |
| A | US 2020/333535 A1 (TSANG HON KI [CN] ET AL) 22 octobre 2020 (2020-10-22) ----- | 1-12 | |

-/--

Le présent rapport a été établi pour toutes les revendications

| Lieu de la recherche | Date d'achèvement de la recherche | Examinateur |
|---|---|---|
| La Haye | 10 avril 2025 | Zakynthinos, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...................................................................

& : membre de la même famille, document correspondant

EPO FORM 1503 03.82 (P04C02)

page 2 de 4

**RAPPORT DE RECHERCHE EUROPEENNE**

Numéro de la demande

EP 24 22 3292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 10 394 058 B1 (VERMEULEN DIEDRIK [US] ET AL) 27 août 2019 (2019-08-27) ----- | 1-12 | |
| A | GALINA GEORGIEVA ET AL: "Cross-polarization effects in sheared 2D grating couplers in a photonic BiCMOS technology", ARXIV.ORG, CORNELL UNIVERSITY LIBRARY, 201 OLIN LIBRARY CORNELL UNIVERSITY ITHACA, NY 14853, 22 juillet 2020 (2020-07-22), XP081725480, DOI: 10.35848/1347-4065/AB8E21 ----- | 1-12 | |
| A | CN 113 759 460 A (SUZHOU WEIGUANG ELECTRONIC FUSION TECH RESEARCH INSTITUTE CO LTD) 7 décembre 2021 (2021-12-07) ----- | 1-12 | |
| A | PREITE MASSIMO VALERIO ET AL: "Geometrical Representation of a Polarisation Management Component on a SOI Platform", MICROMACHINES, vol. 10, no. 6, 30 mai 2019 (2019-05-30), page 364, XP055840887, Switzerland ISSN: 2072-666X, DOI: 10.3390/mi10060364 ----- | 1-12 | DOMAINES TECHNIQUES RECHERCHES (IPC) |
| A | S PATHAK ET AL: "Compact SOI-based polarization diversity wavelength de-multiplexer circuit using two symmetric AWGs", OPTICS EXPRESS, vol. 20, no. 26, 3 décembre 2012 (2012-12-03), pages B493-B500, XP055658868, ----- | 1-12 | |
| A | US 2019/243068 A1 (DENG SHUPENG [CN] ET AL) 8 août 2019 (2019-08-08) ----- -/-- | 1-12 | |

Le présent rapport a été établi pour toutes les revendications

| Lieu de la recherche | Date d'achèvement de la recherche | Examinateur |
|---|---|---|
| La Haye | 10 avril 2025 | Zakynthinos, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

page 3 de 4

EP 4 579 297 A1

**RAPPORT DE RECHERCHE EUROPEENNE**

Europäisches Patentamt
European Patent Office
Office européen des brevets

Numéro de la demande

EP 24 22 3292

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 2 879 250 A1 (AURRION INC [US]) 3 juin 2015 (2015-06-03) ----- | 1-12 | |
| A | JINGHUI ZOU ET AL: "Single step etched two dimensional grating coupler based on the SOI platform", OPTICS EXPRESS, vol. 23, no. 25, 9 décembre 2015 (2015-12-09), page 32490, XP055595511, DOI: 10.1364/OE.23.032490 ----- | 1-12 | |

**DOMAINES TECHNIQUES RECHERCHES (IPC)**

Le présent rapport a été établi pour toutes les revendications

| Lieu de la recherche | Date d'achèvement de la recherche | Examinateur |
|---|---|---|
| La Haye | 10 avril 2025 | Zakynthinos, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

page 4 de 4

**ANNEXE AU RAPPORT DE RECHERCHE EUROPEENNE
RELATIF A LA DEMANDE DE BREVET EUROPEEN NO.**

EP 24 22 3292

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

10-04-2025

| Document brevet cité au rapport de recherche | Date de publication | Membre(s) de la famille de brevet(s) | Date de publication |
|---|---|---|---|
| US 2012207428 A1 | 16-08-2012 | EP 2494393 A1<br>US 2012207428 A1<br>WO 2011051358 A1 | 05-09-2012<br>16-08-2012<br>05-05-2011 |
| CN 112946930 A | 11-06-2021 | AUCUN | |
| CN 112034638 A | 04-12-2020 | AUCUN | |
| US 2020333535 A1 | 22-10-2020 | AUCUN | |
| US 10394058 B1 | 27-08-2019 | US 10078232 B1<br>US 10394058 B1 | 18-09-2018<br>27-08-2019 |
| CN 113759460 A | 07-12-2021 | AUCUN | |
| US 2019243068 A1 | 08-08-2019 | CN 109791302 A<br>EP 3514608 A1<br>US 2019243068 A1<br>WO 2018072068 A1 | 21-05-2019<br>24-07-2019<br>08-08-2019<br>26-04-2018 |
| EP 2879250 A1 | 03-06-2015 | EP 2879250 A1<br>US 9310561 B1 | 03-06-2015<br>12-04-2016 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20120207428 A1

**Littérature non-brevet citée dans la description**

- **F. VAN LAERE et al.** Efficient Polarization Diversity Grating Couplers in Bonded InP-Membrane. *IEEE Photonics Technol. Lett.*, February 2008, vol. 20 (4), 318-320
- **MEKIS et al.** A Grating-Coupler-Enabled CMOS Photonics Platform. *IEEE J. Sel. Top. Quantum Electron.*, May 2011, vol. 17 (3), 597-608
- Reducing Polarization-Dependent Loss of Silicon-on-Insulator Fiber to Chip Grating Couplers. **ROBERT HALIR et al.** IEEE PHOTONICS TECHNOLOGY LETTERS. IEEE, 15 March 2010, vol. 22, 389-391
- High-Efficiency Two-Dimensional Perfectly Vertical Grating Coupler With Ultra Low Polarization Dependent Loss and Large Fibre Misalignment Tolérance. **ZANYUN ZHANG et al.** IEEE JOURNAL OF QUANTUM ELECTRONICS. IEEE, 07 July 2021, vol. 57, 1-7
- Two-DimensionalApodized Grating Coupler for Polarization-Independent and Surface-Normal Optical Coupling. **ZANYUN ZHANG et al.** JOURNAL OF LIGHTWAVE TECHNOLOGY. IEEE, 08 April 2020, vol. 38, 4037-4044

- **S. PLANTIER et al.** Impact of scattering element shape on polarisation dépendent loss in two dimensional grating couplers. *IEEE 13th International Conférence on Group IV Photonics (GFP)*, August 2016
- **HARRIS N. C. et al.** Efficient, Compact and Low Loss Thermo-Optic Phase Shifier in Silicon. *Optics Express*, 2014, vol. 22 (9)
- **A. MASOOD et al.** Comparison of heater architectures for thermal control of silicon photonic circuits. *10th International Conférence on Group IV Photonics, Seoul, Korea (South)*, 2013, 83-84
- **HARRIS, N. C. et al.** Efficient, Compact and Low Loss Thermo-Optic Phase Shifter in Silicon. *Optics Express*, 2014, vol. 22 (9)
- High-Efficiency Two-Dimensional Perfectly Vertical Grating Coupler With Ultra-Low Polarization Dependent Loss and Large Fibre Misalignment Tolerance. **ZANYUN ZHANG et al.** IEEE JOURNAL OF QUANTUM ELECTRONICS. IEEE, 07 July 2021, vol. 57, 1-7
- Two-Dimensional Apodized Grating Coupler for Polarization-Independent and Surface-Normal Optical Coupling. **ZANYUN ZHANG et al.** JOURNAL OF LIGHTWAVE TECHNOLOGY. IEEE, 08 April 2020, vol. 38, 4037-4044